(19) Europäisches Patentamt / European Patent Office / Office européen des brevets

(11) **EP 4 582 586 A1**

(12) **EUROPEAN PATENT APPLICATION**
published in accordance with Art. 153(4) EPC

(43) Date of publication:
09.07.2025 Bulletin 2025/28

(21) Application number: 23860266.8

(22) Date of filing: 28.08.2023

(51) International Patent Classification (IPC):
C23C 28/00 (2006.01)    B32B 9/00 (2006.01)
B32B 15/04 (2006.01)    C21D 1/18 (2006.01)
C21D 9/00 (2006.01)    C22C 21/02 (2006.01)
C22C 38/00 (2006.01)    C22C 38/14 (2006.01)
C22C 38/58 (2006.01)    C23C 26/00 (2006.01)

(52) Cooperative Patent Classification (CPC):
B32B 9/00; B32B 15/04; C21D 1/18; C21D 9/00;
C22C 21/02; C22C 38/00; C22C 38/14;
C22C 38/58; C23C 26/00; C23C 28/00

(86) International application number:
PCT/JP2023/030923

(87) International publication number:
WO 2024/048504 (07.03.2024 Gazette 2024/10)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 29.08.2022 JP 2022135751

(71) Applicant: NIPPON STEEL CORPORATION
Chiyoda-ku
Tokyo 100-8071 (JP)

(72) Inventors:
• SUZUKI, Yuki
  Tokyo 100-8071 (JP)
• FUJITA, Soshi
  Tokyo 100-8071 (JP)
• IRIKAWA, Hideaki
  Tokyo 100-8071 (JP)

(74) Representative: Vossius & Partner
Patentanwälte Rechtsanwälte mbB
Siebertstrasse 3
81675 München (DE)

(54) **ALUMINUM-PLATED STEEL SHEET FOR HOT STAMPING**

(57) The aluminum-plated steel sheet for hot stamping includes: a base steel sheet; an aluminum coating layer provided on at least one surface of the base steel sheet; and a surface treatment film provided on the aluminum coating layer, wherein the surface treatment film includes: a compound A containing carbon; and a compound B that is an oxide or a fluoride of a metal element M and has a rutile structure, a carbon concentration of the compound A is 80 mass% or more, and a concentration of the metal element M satisfies a following formula (1) and a following formula (2):

$$1 \leq C_{bM} \leq 40 \cdots \text{Formula (1)}$$

$$1.5 \leq C_{bM}/C_{tM} \leq 10.0 \cdots \text{Formula (2)}$$

herein, when the surface treatment film has an average thickness $H$ ($\mu$m), $C_{tM}$ in the formula (2) is a concentration of the metal element M in terms of mass% at a position of 0.05H from a surface of the surface treatment film, and $C_{bM}$ in the formula (1) and the formula (2) is a concentration of the metal element M in terms of mass% at a position of 0.95H from a surface of the surface treatment film.

EP 4 582 586 A1

FIG. 1

**Description**

TECHNICAL FIELD

The present invention relates to an aluminum-plated steel sheet for hot stamping.
Priority is claimed on Japanese Patent Application No. 2022-135751, filed August 29, 2022, the content of which is incorporated herein by reference.

BACKGROUND ART

In recent years, there has been an increasing demand for suppressing consumption of chemical fuels for environmental protection and prevention of global warming, and the demand has affected various manufacturing industries. For example, an automobile, which is essential for daily life and activities as a movement unit, is also not an exception, and improvement in fuel efficiency by weight reduction of a vehicle body or the like is required. However, regarding an automobile, simply realizing weight reduction of a vehicle body may lead to deterioration in safety, such as deterioration in vehicle body strength (for example, deterioration in collision resistance and the like), which is undesirable in terms of product quality.
Therefore, in weight reduction of a vehicle body, it is necessary to appropriately implement weight reduction after securing safety.
Many of the structures of an automobile are formed of iron, in particular, a steel sheet. Therefore, reducing the weight of the steel sheet is effective for weight reduction of a vehicle body. In addition, such demand for reducing the weight of the steel sheet is similarly made not only in the automobile manufacturing industries but also in various manufacturing industries. In response to such demand, if the weight of the steel sheet is simply reduced, it is conceivable to reduce the sheet thickness of the steel sheet. However, reducing the sheet thickness of the steel sheet leads to deterioration in vehicle body strength. Therefore, in recent years, research and development have been conducted on a steel sheet capable of maintaining or increasing the mechanical strength of a vehicle body constituted by the steel sheet even if the steel sheet is made thinner than a conventional steel sheet that has been used in the past by increasing the mechanical strength of the steel sheet.
In general, a material having high mechanical strength shows a tendency that shape fixability deteriorates in forming working such as bending. Therefore, when a material having high mechanical strength is processed into a complicated shape, processing itself becomes difficult. One means for solving such a problem regarding formability is a hot stamping method (also referred to as a hot pressing method, a hot press method, a high temperature press method, or a die quenching method).
In the hot stamping method, a material to be formed is heated to a high temperature to be transformed into a microstructure referred to as austenite (austenitized), and a steel sheet softened by heating is press-worked and formed, and then is cooled. According to the hot stamping method, since the material is once heated to a high temperature and softened, the material can be easily press-worked. Furthermore, the mechanical strength of the material can be enhanced by a quenching effect by cooling after forming. Therefore, by the hot stamping method, a formed article having good shape fixability and high mechanical strength can be obtained.
For example, Patent Document 1 discloses a technique for manufacturing a formed article usable as an automobile member by processing a galvannealed steel sheet by a hot stamping method.
In addition, Patent Document 2 and Patent Document 3 disclose a technique in which a film mainly composed of an organic substance such as a carbon pigment is provided on an aluminum-plated steel sheet to shorten the time for heating to a desired temperature.

Citation List

Patent Document

Patent Document 1: Japanese Unexamined Patent Application, First Publication No. 2003-126921
Patent Document 2: Japanese Unexamined Patent Application, First Publication No. 2011-149084
Patent Document 3: Published Japanese Translation No. 2017-518438 of the PCT International Publication

SUMMARY OF INVENTION

Technical Problem

Here, in the hot stamping method described in Patent Document 1, it is necessary to heat a steel sheet to be processed to 700 to 1000°C. Therefore, it is necessary to secure a time for heating the steel sheet to a desired temperature, and improvement in productivity is insufficient.

In addition, in the aluminum-plated steel sheet described in Patent Documents 2 and 3, since the carbon pigment and the like contained in the film on the steel sheet are all organic substances, all of the organic substances are eliminated when the aluminum-plated steel sheet is heated to a high temperature range of 750°C or higher. Therefore, also in the techniques described in Patent Document 2 and Patent Document 3, improvement in productivity is insufficient.

The present invention has been made in view of the above problems, and an object of the present invention is to provide a steel sheet for hot stamping that can further improve productivity of a hot stamping member.

Solution to Problem

In order to solve the above-described problems, the present inventors have intensively studied. As a result, it has been found that, when a hot stamping member is manufactured using a steel sheet for hot stamping and the steel sheet can be heated to a desired temperature (for example, Ac3 point or higher) with an increased temperature rising rate, the heating time can be shortened to contribute to improvement in productivity. Specifically, the present inventors have found that a surface treatment film is provided on the plating layer, the surface treatment film containing a compound A having a carbon concentration of 80 mass% or more, and a compound B that is an oxide or a fluoride of a metal element M and has a rutile structure, and the concentration range of the metal element M is controlled within a predetermined range, thereby the temperature rising rate can be greatly increased.

The gist of the present invention completed based on such findings is as follows.

[1] An aluminum-plated steel sheet for hot stamping according to an embodiment of the present invention includes:

a base steel sheet;
an aluminum coating layer provided on at least one surface of the base steel sheet; and
a surface treatment film provided on the aluminum coating layer,
wherein the surface treatment film includes:

a compound A containing carbon; and
a compound B that is an oxide or a fluoride of a metal element M and has a rutile structure,
a carbon concentration of the compound A is 80 mass% or more, and
a concentration of the metal element M satisfies a following formula (1) and a following formula (2).

$$1 \leq C_{bM} \leq 40 \cdots \text{Formula (1)}$$

$$1.5 \leq C_{bM}/C_{tM} \leq 10.0 \cdots \text{Formula (2)}$$

Herein, when the surface treatment film has an average thickness H ($\mu$m),
$C_{tM}$ in the formula (2) is a concentration of the metal element M in terms of mass% at a position of 0.05H from a surface of the surface treatment film, and
$C_{bM}$ in the formula (1) and the formula (2) is a concentration of the metal element M in terms of mass% at a position of 0.95H from the surface of the surface treatment film.

[2] In the aluminum-plated steel sheet for hot stamping according to [1], a content of the compound A may be 30 to 80% at a position of 0.90H from the surface of the surface treatment film.

[3] In the aluminum-plated steel sheet for hot stamping according to [1] or [2], the compound B may be $TiO_2$.

Advantageous Effects of Invention

According to the above embodiment of the present invention, it is possible to provide a steel sheet for hot stamping capable of further improving productivity of a hot stamping member.

BRIEF DESCRIPTION OF DRAWINGS

[FIG. 1] FIG.1 is a schematic cross-sectional view of an aluminum-plated steel sheet for hot stamping according to an embodiment of the present invention.
[FIG. 2] FIG.2 is a schematic cross-sectional view of an aluminum-plated steel sheet for hot stamping according to an embodiment of the present invention.

DESCRIPTION OF EMBODIMENTS

Hereinafter, a preferred embodiment of the present invention will be described in detail. Note that the present invention is not limited only to the constitution disclosed in the embodiment, and various modifications can be made without departing from the gist of the present invention. In addition, a range of numerical value limitation described below includes the lower limit and the upper limit in the range. A numerical value indicated as "more than" or "less than" is not included in the numerical value range.

(Aluminum-Plated Steel Sheet for Hot Stamping)

The aluminum-plated steel sheet for hot stamping (hereinafter, also referred to as "aluminum-plated steel sheet for HS") according to an embodiment of the present invention makes it possible to increase the temperature rising rate during heating the aluminum-plated steel sheet for HS in manufacturing a hot stamping member using the aluminum-plated steel sheet for HS. That is, it is possible to improve productivity of a hot stamping member by using the aluminum-plated steel sheet for HS of the embodiment capable of increasing the temperature rising rate during heating.

In order to improve the temperature rising rate during heating the aluminum-plated steel sheet for HS, the aluminum-plated steel sheet for hot stamping of the embodiment has a surface treatment film containing a predetermined compound on at least one surface of the plated steel sheet on which an aluminum coating layer is formed. As described above, a surface treatment film containing a predetermined compound is provided on at least one surface of the plated steel sheet on which an aluminum coating layer is provided, which makes it possible to increase the temperature rising rate during heating the obtained aluminum-plated steel sheet for HS. Note that the surface treatment film may be provided on both surfaces of the plated steel sheet on which the aluminum coating layer is provided or may be provided only on one surface. The surface treatment film may be provided on the entire surface of the plated steel sheet on which the aluminum coating layer is provided or may be provided only on part of the surface. From the viewpoint of further improving the productivity of a hot stamping member, the surface treatment film is preferably provided on the entire surface of the plated steel sheet on which the aluminum coating layer is provided.

In the aluminum-plated steel sheet for hot stamping according to the embodiment, the type of the steel sheet as a base metal (base steel sheet) is not particularly limited. Examples of the base steel sheet include various hot-rolled steel sheets and cold-rolled steel sheets. The plated steel sheet constituting the aluminum-plated steel sheet for hot stamping of the embodiment includes a plating layer on at least one surface of such a base steel sheet. Examples of the plated steel sheet include a steel sheet subjected to melt aluminum plating or the like. However, the plating layer of the embodiment is not limited to melt aluminum plating as long as the plating layer can be applied to hot stamping.

Conventionally, many steel sheets used as a frame component for an automobile and the like are a hot-rolled steel sheet, a cold-rolled steel sheet, or a plated steel sheet plated with aluminum, zinc, or the like. Since the conventional steel sheets have low emissivity, the temperature rising rate with respect to radiation heating is low.

In the aluminum-plated steel sheet for hot stamping of the embodiment, the predetermined surface treatment film to be described later is provided to at least one entire surface of the plating layer, so that the temperature rising rate during hot stamping heating can be increased. Specifically, the aluminum-plated steel sheet for HS having a predetermined surface treatment film is heated, and the heated aluminum-plated steel sheet for hot stamping is hot-stamped. Thereby, the productivity of a hot stamping member can be further improved.

<Surface Treatment Film>

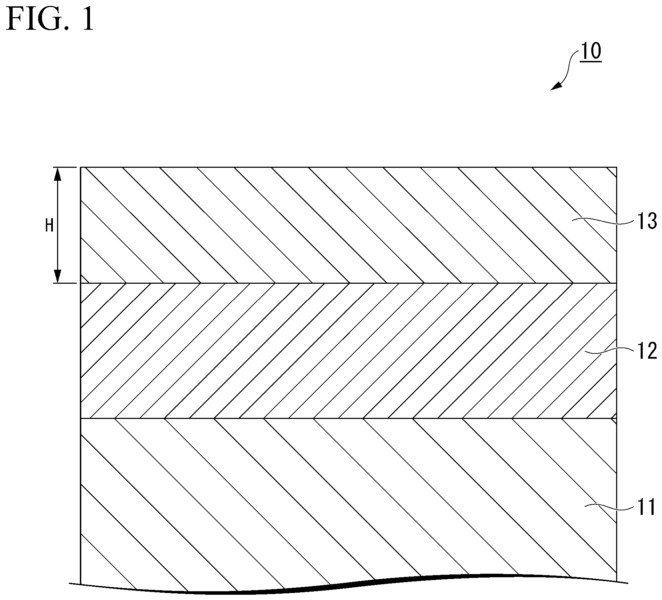

FIG. 1 is a schematic cross-sectional view of the surface portion of one surface of the aluminum-plated steel sheet for hot stamping according to the embodiment.

As illustrated in FIG. 1, an aluminum-plated steel sheet 10 for hot stamping according to the embodiment includes, for example, a base steel sheet 11, an aluminum coating layer (Al-plating layer) 12 provided on at least one surface of the base steel sheet 11, and a surface treatment film 13 provided on the aluminum coating layer 12. In the aluminum-plated steel sheet 10 for hot stamping according to the embodiment, the surface to which the surface treatment film 13 is provided (that is, the surface of the surface treatment film 13) has high emissivity. Therefore, the temperature rising rate during hot stamping heating is high, and as a result, productivity of a hot stamping member can be further improved. FIG. 1 is a schematic view for illustration, and the dimensions of the surface treatment film 13, the aluminum coating layer 12, and the like do not necessarily indicate a preferred embodiment and are not necessarily limited to the dimensions and the like in FIG. 1.

The surface treatment film 13 according to the embodiment includes: a compound A containing carbon; and a compound B that is an oxide or a fluoride of a metal element M and has a rutile structure.

The surface treatment film 13 according to the embodiment may further contain a binder component as necessary. The surface treatment film 13 according to the embodiment may contain silica. Furthermore, in the embodiment, the content of the compound A and the compound B in the surface treatment film 13, the concentration distribution of the metal element M, the method for applying and drying the surface treatment film 13, the film thickness, and the like are adjusted. Thereby, the temperature rising rate (heating efficiency) can be improved during hot stamping heating.

In the surface treatment film 13 according to the embodiment, the compound B has a predetermined concentration distribution. Specifically, in the concentration distribution (concentration gradient), the concentration of the metal element M constituting the compound B with respect to the film is larger on the plating layer side of the film than on the surface side of the film in the film thickness direction. The presence of the metal element M in such a predetermined concentration distribution makes it possible to further increase heating efficiency by the surface treatment film 13. When the steel sheet for hot stamping according to the embodiment is subjected to hot stamping heating, radiation heat from the heating atmosphere can be efficiently absorbed. **In** addition, heat can be efficiently absorbed also by heat conduction due to contact with the heated atmosphere gas. As a result, the entire surface treatment film can be quickly heated.

Hereinafter, the constituent requirements of the surface treatment film 13 will be described in detail.

[Compound A]

The carbon concentration of the compound A included in the surface treatment film 13 is 80 mass% or more. When the carbon concentration of the compound A is less than 80 mass%, the compound A is decomposed and oxidized even at a relatively low temperature when the aluminum-plated steel sheet for HS is heated in a hot stamping step, so that the compound A may disappear from the film. When the compound A disappears from the film, the effect of enhancing the temperature rising characteristics cannot be maintained at high temperatures. Therefore, the carbon concentration of the compound A is 80 mass% or more. The carbon concentration of the compound A is preferably 82 mass% or more, and preferably 85 mass% or more. The carbon concentration of the compound A may be 100 mass%.

Examples of the compound A include carbon black (CB), graphite, and soot.

Here, the carbon concentration of the compound A can be measured by cross-sectional analysis of the surface treatment film using a transmission electron microscope (TEM), energy dispersive X-ray spectroscopy (EDS), and electron beam diffraction.

Specifically, the spectrum of the characteristic X-ray at the time of electron beam irradiation is measured, the detection intensity for each energy is calculated, and the element constituting the compound to be measured can be specified from the value of the energy. Then, from the detection intensity of each element constituting the compound to be measured, the concentration of each element in the compound is calculated using a calibration curve prepared in advance from the relationship between a substance whose element concentration is known and the detection intensity data for the substance. The measurement is performed at 10 points in the same compound, and when all the elements fall within the range in which the absolute maximum value of the concentration of each element is 1.0 times to 1.3 times the absolute minimum value, it is regarded as the same compound. That is, the measurement is performed at 10 points in one compound observed by TEM-EDS, and when all the elements constituting the compound fall within the range in which the absolute maximum value of the concentration is 1.0 times to 1.3 times the absolute minimum value, it is regarded as the same compound.

The TEM observation sample is prepared by a FIB sampling method using a focused ion beam (FIB) machining observation device (for example, "NB 5000", manufactured by Hitachi High-Tech Corporation). The acceleration voltage during processing is set to 40 kV.

The carbon concentration of the compound A is defined as follows. In the cross-sectional analysis for the surface treatment film, measurement is performed at 10 points in the same compound within a range surrounded by the film thickness and the length of 5 $\mu$m in the direction orthogonal to the film thickness. Then the intermediate value between the absolute maximum value and the absolute minimum value of the carbon concentration is defined as the carbon concentration of the compound A. When a plurality of the compounds A is present within the above range, the intermediate value is calculated for each compound A, and the average value of the obtained intermediate values is defined as the carbon concentration of the compound A. By such a method, the concentration of an element such as carbon constituting the compound A can be analyzed. Note that the compound A containing carbon as a main component and the compound B that is an oxide or a fluoride of the metal element M can be distinguished by the difference in carbon concentration.

In the embodiment, when the average thickness of the surface treatment film is defined as H ($\mu$m), the content of the compound A having a carbon concentration of 80 mass% or more is preferably 10 to 90% or 20 to 90%, and more preferably 30 to 80% at 0.90H from the surface of the surface treatment film (Hereinafter, the position is also referred to as "interface side position P". The interface side position P can be referred to as the position of 0.10H from the interface between the surface treatment film and the Al-plating layer).

The compound A having a carbon concentration of 80 mass% or more has an increased radiation heat-absorbing effect. In addition, the compound A, having a high carbon concentration, is less likely to decompose due to heating or disappear from the surface treatment film due to volatilization. Therefore, even when the temperature of the outermost surface of the aluminum-plated steel sheet for HS is increased by hot stamping heating, radiation heat absorption can be enhanced at high temperature ranges. In order to obtain such an effect, it is effective to increase the content of the compound A. In the embodiment, the content of the compound A is preferably 10% or more, 20% or more, and more preferably 30% or more at the interface side position P. Thereby, the temperature rising rate can be further improved during hot stamping heating. On the other hand, in the surface treatment film, the compound A itself does not have an action of enhancing film adhesion. Therefore, in the surface treatment film, the content of the compound A is preferably suppressed to a predetermined amount or less particularly at the interface side position P, which is the Al-plating layer side. Specifically, the content of the compound A is preferably 90% or less, and more preferably 80% or less, at the interface side position P. Thereby, adhesion between the surface treatment film and the Al-plating layer is improved. As the mechanism for improved film adhesion when the content of the compound A is preferably 90% or less and more preferably 80% or less at the interface side position P, it is considered that chemical and physical bonding can be secured between the high polarity rutile compound and the binder resin contained in the surface treatment film and the aluminum coating layer, and as a result, an effect of enhancing film adhesion is exhibited.

The content of the compound A at the interface side position P is determined by the following method.

First, the compound A having a carbon concentration of 80% or more is detected by EDS at the interface side position P by TEM observation. For example, when the average thickness H of the surface treatment film is 5 $\mu$m, the "0.90H position" is the position of 4.5 $\mu$m depth (thickness) from the surface of the surface treatment film (that is, the position of 0.5 $\mu$m depth (thickness) from the interface between the surface treatment film and the Al-plating layer to the film side).

Next, when the TEM image of the sample to be described later is observed at 10 points at intervals of 30 nm in the direction perpendicular to the thickness direction of the surface treatment film layer (the direction parallel to the interface between the aluminum coating layer and the surface treatment film, and perpendicular to the thickness direction of the sample) and the presence of the compound A is observed at 3 points, the content of the compound A at the interface side position P is defined as 30%. Similarly, when the presence of the compound A is observed at 4 points, the content of the compound A is defined as 40%, and the same applies hereinafter. Therefore, when the compound A having a carbon concentration of 80% or more is observed at 3 points or more and 8 points or less, it means that the content of the compound A is 30 to 80%.

The TEM observation sample used to calculate the content of the compound A is prepared by a FIB sampling method using a focused ion beam (FIB) machining observation device (for example, "NB 5000", manufactured by Hitachi High-Tech Corporation). The acceleration voltage during processing is set to 40 kV. The thickness of the sample is 100 nm ± 10 nm.

As described above, the content of the compound A is a ratio (%) calculated from the ratio of the number of points at which the compound A is observed (present) among 10 points (= the number of points at which the compound A is present/10) in a specific direction in the TEM image of the sample having a thickness of 100 ± 10 nm (the direction parallel to the surface of the surface treatment film and the direction perpendicular to the thickness direction of the sample). Thus, the unit of the content is not volume% or area%, but dimensionless%.

[Compound B]

The compound B is an oxide or fluoride of a metal element M and has a rutile structure. Examples of the metal element M include Ti, V, Mn, Ru, Cs, Ir, Ge, Cu, Ag, and Ni. If necessary, only any one or more of the above-mentioned elements may be used as the metal element M. Examples of the compound B include $TiO_2$, $VO_2$, $\beta$-$MnO_2$, $RuO_2$, $CsO_2$, $IrO_2$, $GeO_2$, $CuO_2$, $AgO_2$, and $NiF_2$. If necessary, any one or more of the above-mentioned compounds may be used as the compound B.

When the compound B having a rutile compound structure is contained in the film, the temperature rising rate can be increased during hot stamping. The reason for this is not clear but is presumed as follows.

The rutile structure is a structure in which anions have distorted hexagonal closest packing and cations are arranged in the six-coordination space (six-coordination gap). It is presumed that, when the compound B having such a rutile compound structure is contained in the film, an interionic distance that is active to radiation due to electromagnetic waves in the infrared or near-infrared region, which is a main heating factor, is obtained during hot stamping heating, and thereby the temperature rising rate can be increased during hot stamping.

The crystal structure of the compound B and the type of the compound (oxide or fluoride) can be determined by cross-sectional analysis of the surface treatment film using TEM, EDS, and electron beam diffraction. Specifically, an electron beam diffraction image at the time of electron beam irradiation is compared with a database provided in advance. When the compound is classified into a rutile structure, it can be determined that the compound has a rutile structure. In addition, the compound can be specified from the ratio of the element concentration by EDS, and when the ratio of oxygen or fluorine is 10 mass% or more, it can be determined that the compound is an oxide or a fluoride.

In the embodiment, the concentration of the metal element M in the compound B satisfies the following formulas (1) and (2).

$$1 \leq C_{bM} \leq 40 \cdots \text{Formula (1)}$$

$$1.5 \leq C_{bM}/C_{tM} \leq 10.0 \cdots \text{Formula (2)}$$

Herein, when the surface treatment film has an average thickness H ($\mu$m), $C_{tM}$ in the formula (2) is a concentration (mass%) of the metal element M at a position of 0.05H from the surface of the surface treatment film 13, and $C_{bM}$ in the formula (1) and the formula (2) is a concentration (mass%) of the metal element M at a position of 0.95H from the surface of the surface treatment film 13.

As shown in FIG. 1, when the thickness of the surface treatment film 13 is H ($\mu$m), the concentration $C_{bM}$ of the metal element M at 0.95H from the surface of the surface treatment film 13 is 1% or more and 40% or less in terms of mass%.

When $C_{bM}$ is less than 1%, it is difficult to enhance the temperature rising characteristics particularly in high temperature ranges during heating in hot stamping. Therefore, $C_{bM}$ is 1% or more. $C_{bM}$ is preferably 5% or more, more preferably 8% or more. When the concentration $C_{bM}$ of the metal element M is 8% or more, the temperature rising rate can be further increased during hot stamping. On the other hand, when $C_{bM}$ is more than 40%, the temperature rising rate during heating in hot stamping is saturated, whereas adhesion between the surface treatment film 13 and the Al-plating layer 12 is deteriorated. This is because the compound B is relatively hard, and when the concentration $C_{bM}$ increases in the surface treatment film 13 close to the Al-plating layer 12, the followability of the surface treatment film 13 to fine irregularities on the surface of the Al-plating layer 12 decreases. Therefore, $C_{bM}$ is 40% or less. As a result, the temperature rising rate can be increased during hot stamping, and film adhesion can also be improved. $C_{bM}$ is preferably 35% or less, more preferably 30% or less, and still more preferably 20% or less. When the concentration $C_{bM}$ of the metal element M is 20% or less, adhesion of the surface treatment film 13 to the aluminum coating layer 12 can be further enhanced.

As shown in the above formula (2), $C_{bM}/C_{tM}$ is 1.5 to 10.0.

When the concentration of the metal element M in the vicinity of the interface between the Al-plating layer 12 and the surface treatment film 13 is high and $C_{bM}/C_{tM}$ is 1.5 or more, the metallic gloss of the surface of the Al-plating layer 12 can be hidden, and reflection of radiation heat can be suppressed. $C_{bM}/C_{tM}$ is preferably 2.0 or more, and more preferably 3.0 or more. On the other hand, when $C_{bM}/C_{tM}$ exceeds 10.0, heat absorption is insufficient on the surface side of the surface treatment film 13, and as a result, the temperature rising rate cannot be increased during hot stamping. Therefore, $C_{bM}/C_{tM}$ is 10.0 or less. As a result, reflection of radiation heat on the surface of the Al-plating layer 12 and the endothermic state on the surface side of the surface treatment film 13 can be controlled in an appropriate state, and the temperature rising rate can be increased. $C_{bM}/C_{tM}$ is preferably 8.0 or less, and more preferably 6.0 or less.

The concentration (mass%) $C_{tM}$ of the metal element M at 0.05H from the surface of the surface treatment film 13 and the concentration $C_{bM}$ of the metal element M at 0.95H from the surface of the surface treatment film 13 can be measured by fluorescent X-ray analysis and glow discharge optical emission spectroscopy (GDS) when the thickness of the surface treatment film 13 is H ($\mu$m) as shown in FIG. 1.

Hereinafter, how to determine $C_{bM}$ and $C_{tM}$ will be described in detail.

First, the average concentration (mass%) of the metal element M is determined as follows.

The detection intensity (kcps, $10^3$ count per second) of the metal element M is determined by fluorescent X-ray analysis using the aluminum-plated steel sheet provided with the surface treatment film including the compound A and the compound B (oxide or fluoride of the metal element M). Note that a calibration curve is prepared in advance by fluorescent X-rays in accordance with JIS K 0119 (2008) between the adhesion amount ($g/m^2$) of the metal element M and the detection intensity (kcps) of the metal element M in the surface treatment film.

Using this calibration curve, the adhesion amount P ($g/m^2$) of the metal element M in the surface treatment film is determined from the detection intensity (kcps) of the metal element M obtained by fluorescent X-ray analysis. When the detection intensity of the metal element M in the surface treatment film is determined by fluorescent X-ray analysis, the concentration of the metal element M in the base steel material does not affect, that is, may be ignored. That is, since fluorescent X-rays are greatly attenuated by the metal element or the like in the aluminum coating layer and the surface treatment film, it may be considered that the elements in the base steel material at a position deeper than the aluminum coating layer and the surface treatment film does not affect the detection intensity of the metal element M in the surface treatment film.

Subsequently, the metal element M is measured in the depth direction of the surface treatment film 13 by GDS, and the position where the strength of the metal element M is less than 1/2 on the base steel sheet side from the depth (thickness) position showing the absolute maximum value of the strength is defined as the interface between the surface treatment film and the Al-plating layer, and the thickness of the surface treatment film 13 is determined. The thickness is measured at 5 points, and the average value of the obtained thicknesses is defined as the thickness H ($\mu$m) of the surface treatment film 13. The value obtained by dividing the adhesion amount P of the metal element M by H and multiplying the result by 100 "P $\times$ 100/H" is regarded as the average concentration (mass%) of the metal element M in the surface treatment film in the entire depth direction.

On the other hand, the concentration of the metal element M at an arbitrary position in the depth direction of the surface treatment film can be determined using the fact that the relationship between the average value of the strength of the metal element M from the surface of the surface treatment film to the interface with the Al-plating layer measured by GDS and the average concentration P $\times$ 100/H is a proportional relationship of 1 : 1. That is, P $\times$ 100/H, which is the average concentration (mass%) of the metal element M in the entire film thickness, and the average value $\alpha$ of the strength of the metal element M from the surface to the interface with the Al-plating layer are obtained, respectively.

On the other hand, when the intensity (kcps) of the metal element M at an arbitrary position X in the depth direction is $\beta$, the concentration $C_{XM}$ (mass%) of the metal element M at the position X is determined by the following formula (3) using a proportional relationship.

$$C_{XM} = P/H \times 100 \times (\beta/\alpha) \cdots (3)$$

The average concentration (mass%) of the metal element M at 0.05H determined using the formula (3) is defined as $C_{tM}$, and the concentration (mass%) of the metal element M at the position 0.95H from the surface is defined as $C_{bM}$.

In the embodiment, the compound B is preferably rutile $TiO_2$. When the compound B is rutile $TiO_2$, the temperature rising rate can be further increased during hot stamping. The reason for this is not clear but is presumed as follows.

The rutile $TiO_2$ can maintain high emissivity even in high temperature ranges from 300°C to 900°C as compared with a compound such as $Al_2O_3$ usually generated on the surface of the aluminum coating layer in the heating process of hot stamping. Therefore, it is presumed that the amount of heat input by radiation can be increased. When the temperature is raised to further high temperature ranges, there is a possibility that a composite oxide of rutile $TiO_2$ and $Al_2O_3$ is formed. It is also presumed that the fact that the emissivity of the composite oxide of rutile $TiO_2$ and $Al_2O_3$ is higher than that of other oxides is a factor to further increase the temperature rising rate during hot stamping.

The compound B is an oxide or fluoride of the metal element M, and the compound B may be made of two or more kinds of compounds. For example, $TiO_2$ and $VO_2$ may be included as the compound B in the surface treatment film. When two or more kinds of compounds are included as the compound B in the surface treatment film, the compound having the largest content has a desired concentration or distribution that satisfies the above (1) and (2).

When a treatment liquid containing the compound A and the compound B that is an oxide or fluoride of the metal element M and has a rutile structure, and a treatment liquid containing an organic substance such as a resin serving as a binder component or an inorganic substance are separately prepared, and these treatment liquids are separately applied onto the aluminum coating layer to form a laminated film, the compound B does not have a predetermined concentration distribution as described above. In addition, when an attempt is made to form a surface treatment film having a multilayer structure using a plurality of treatment liquids as described above, it is necessary to form the second film after the first film is formed, and thus the manufacturing equipment is increased in size and the manufacturing cost is also increased. Therefore, the surface treatment film 13 of the embodiment needs to have a single layer structure instead of a multilayer structure.

The aluminum-plated steel sheet 10 for hot stamping according to the embodiment includes the surface treatment film 13 having the above characteristics, so that the temperature rising rate can be improved during hot stamping. Therefore, by using the aluminum-plated steel sheet 10 for hot stamping according to the embodiment as a material, the productivity of hot stamped materials can be improved.

The reason why the temperature rising rate of the steel sheet is improved during hot stamping by the provided surface treatment film 13 according to the embodiment is not clear, but it is considered that one of the reasons is that there are many bonds that is active to infrared light having a wavelength of 1 to 10 $\mu$m, which is particularly effective for absorption of radiation heat.

The surface treatment film 13 according to the embodiment can contain resins as various binder components and additives in addition to the compound A and the compound B. When the resin is contained, adhesion between the surface treatment film 13 and the Al-plating layer 12 can be enhanced. Examples of the additive contained in the surface treatment film 13 include a leveling agent, an antifoaming agent, a coloring agent, a viscosity modifier, and an ultraviolet absorber. The coating solution for forming the surface treatment film 13 is preferably obtained by dispersing or dissolving the above-mentioned components in water or a solvent.

In the embodiment, specific methods to provide the surface treatment film 13 include methods such as coating and lamination, but the present invention is not limited to such methods. The surface treatment film 13 may be provided only to one surface of the aluminum-plated steel sheet or to both surfaces of the aluminum-plated steel sheet.

When the surface treatment film 13 is provided to the entire surface of the aluminum coating layer 12 by coating, first, for example, a treatment liquid containing the compound A having a carbon concentration of 80 wt% or more and the compound B that is an oxide or a fluoride of the metal element M and has a rutile structure is prepared. Thereafter, the entire surface of the aluminum coating layer 12 is coated with the treatment liquid with a roll coater, a curtain coater, an inkjet, or the like, and then the volatile component in the treatment liquid is dried. Thereby, the surface treatment film 13 is provided. In particular, inkjet coating is preferable because the film thickness can be continuously changed.

Herein, conventionally (for example, in Patent Document 2 and the like), when an organic substance such as a carbon pigment is contained in the surface treatment film, there is a problem that, when the plated steel sheet is heated to a high temperature range (for example, 750°C or higher), all of the organic substances are eliminated, and the temperature rising characteristics (temperature rising rate) is deteriorated. However, the present inventors have found that the surface treatment film 13 according to the embodiment can be efficiently heated at high temperature ranges even when the organic substance disappears. The mechanism for heating successfully at high temperature ranges even when the organic substance disappears as described above is not clear, but it is presumed that the compound B (oxide or fluoride of the metal element M) included in the film has increased heat input due to radiation at high temperatures.

[Binder Component (Resin)]

The content of the binder component (resin) that can be contained in the surface treatment film 13 according to the embodiment is preferably 40 volume% or more with respect to the total volume of the surface treatment film 13. Various known resins can be used as the binder component.

The resin as the binder component is not particularly limited. Examples thereof include a polyurethane resin, a polyester resin, an acrylic resin, an epoxy resin, a fluororesin, a polyamide resin, a polyolefin resin, and a polymer compound obtained by hydrolysis and condensation polymerization of a silane coupling agent. Examples of the resin include a resin obtained by crosslinking such resins with a crosslinking agent component such as a butylated melamine resin, a methylated melamine resin, a butylmethyl-mixed melamine resin, a urea resin, an isocyanate resin, or a mixture thereof. In addition, examples also include an electron beam curable resin and an ultraviolet curable resin. Among them, the resin as the binder component is preferably any one or more of a polyester resin, an epoxy resin, an acrylic resin, and a polyurethane resin. These resins as the binder component may be used alone or in combination of two or more thereof.

For example, when a polyurethane resin is used as the binder component, the polyurethane resin is preferably a polyether-based polyurethane resin. This is because the use of the polyether-based polyurethane resin can prevent the occurrence of hydrolysis due to acid or alkali as compared with a polyester-based polyurethane resin, and adhesion during processing and corrosion resistance of the processed portion can be secured by suppressing formation of a hard and brittle film as compared with a polycarbonate-based polyurethane resin.

Whether the polyurethane resin is contained can be determined based on whether characteristic absorption at 3330 cm$^{-1}$ (N-H stretching), 1730 cm$^{-1}$ (C=O stretching), 1530 cm$^{-1}$ (C-N), and 1250 cm$^{-1}$ (C-O) is observed in an infrared absorption spectrum obtained by infrared spectroscopy. As for the content of the polyurethane resin, a calibration curve showing a relationship between the content and a strength of characteristic absorption is prepared using a sample in which the content is known in advance, so that the content can be specified from the obtained strength of characteristic absorption.

In addition, it is possible to determine the presence and the content of resins other than the polyurethane resin similarly to the polyurethane resin by focusing on characteristic absorption derived from functional groups specific to each resin. As the component in the treatment liquid for dispersing or dissolving the resin, water or a solvent can be used.

[Additive]

The surface treatment film 13 according to the embodiment can contain various additives such as a leveling agent, a water-soluble solvent, a metal stabilizer, and an etching inhibitor as an additive during preparation of a treatment liquid before film formation as long as the effects of the present invention are not impaired.

Examples of the leveling agent include polyethylene oxide adduct or a polypropylene oxide adduct and an acetylene glycol compound, as nonionic or cationic surfactants.

Examples of the water-soluble solvent include alcohols such as ethanol, isopropyl alcohol, t-butyl alcohol, and propylene glycol, cellosolves such as ethylene glycol monobutyl ether and ethylene glycol monoethyl ether, esters such as ethyl acetate and butyl acetate, and ketones such as acetone, methyl ethyl ketone and methyl isobutyl ketone.

Examples of the metal stabilizer include chelate compounds such as ethylenediaminetetraacetic acid (EDTA) and diethylenetriaminepentaacetic acid (DTPA).

Examples of the etching inhibitor include amine compounds such as ethylenediamine, triethylenepentamine, guanidine, and pyrimidine.

The content of the binder component and the additive can also be measured in the same manner as in the case of the compounds A and B.

[Silica]

The surface treatment film 13 according to the embodiment may contain silica. When silica is contained, the content of silica is preferably 0.01 to 0.3 g/m$^2$. When silica is contained in an amount of 0.01 g/m$^2$ or more, it is possible to prevent the film from being defected due to contact with another steel sheet, equipment, or the like. When silica is contained in an amount exceeding 0.3 g/m$^2$, the effect of increasing temperature cannot be expected and the cost becomes high, which is not preferable from the viewpoint of economic efficiency. As silica is a substance having low electrical conductivity, when silica is contained in an amount exceeding 0.3 g/m$^2$, it is not preferable in terms of weldability after hot stamping. The content of silica in the surface treatment film 13 when silica is contained is preferably as small as possible. The content of silica in the surface treatment film is more preferably 0.10 g/m$^2$ or less, and still more preferably 0.05 g/m$^2$ or less.

[Film Thickness of Surface Treatment Film]

The average film thickness H of the surface treatment film 13 containing the above components is preferably, for example, 0.5 to 15.0 μm.

When the average film thickness of the surface treatment film 13 is less than 0.5 μm, the temperature rising rate cannot be sufficiently increased during hot stamping due to insufficient radiation heat absorption. On the other hand, when the average film thickness of the surface treatment film 13 is more than 15.0 μm, the heat capacity of the surface treatment film 13 itself increases, and becomes a barrier when heat is transferred to the aluminum coating layer 12. As a result, the temperature rising rate cannot be sufficiently improved, and the cost is increased, which is not preferable in terms of economy. When the average film thickness of the surface treatment film 13 is within the range of 0.5 to 15.0 μm, the temperature rising rate can be improved. The average film thickness of the surface treatment film 13 is more preferably 1.0 to 7.0 μm.

<Base Treatment Film>

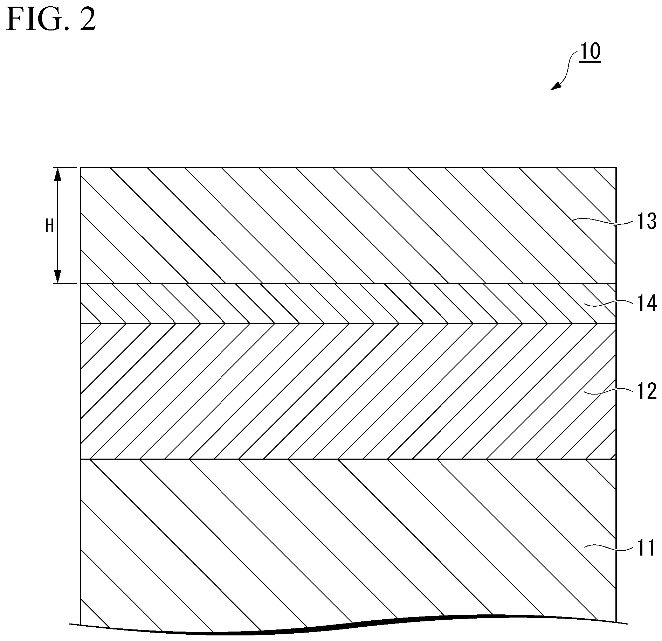

As described in FIG. 2, a base treatment film (chemical conversion treatment layer) 14 may be provided between the surface treatment film 13 and the aluminum coating layer 12 in order to improve adhesion of the surface treatment film 13. FIG. 2 is a schematic view for illustration, and dimensions of the surface treatment film 13, the aluminum coating layer 12, the base treatment film 14, and the like do not necessarily indicate a preferred embodiment and are not necessarily limited to the dimensions and the like in FIG. 2.

The base treatment film 14 may contain any one or more selected from a resin, a silane coupling agent, a zirconium compound, silica, phosphoric acid and a salt thereof, fluoride, and a vanadium compound. When such substances are contained, film formability after the chemical conversion treatment agent is applied, a barrier property (denseness) of the film against corrosion factors such as moisture and a corrosive ion, film adhesion to the plated surface, and the like are further improved, which contributes to raising the corrosion resistance of the film. In particular, when the chemical conversion treatment layer contains any one or more of a silane coupling agent and a zirconium compound, a crosslinked structure is formed in the film, and bonding with the plated surface is further strengthened, so that the adhesion and the barrier property of the film can be enhanced.

When the base treatment film 14 contains any one or more of silica, phosphoric acid and a salt thereof, fluoride, and a vanadium compound, corrosion resistance can be improved by forming a precipitated film or a passive film as an inhibitor on a plated surface or a surface of the base steel sheet.

[Adhesion Amount of Base Treatment Film 14]

The adhesion amount of the base treatment film 14 per one surface of the plating layer is preferably 10 to 1000 mg/m$^2$ in terms of solid content. When the adhesion amount of the base treatment film 14 is less than 10 mg/m$^2$, sufficient working adhesion and corrosion resistance are not secured. When the adhesion amount of the base treatment film 14

exceeds 1000 mg/m$^2$, working adhesion may be deteriorated.

The adhesion amount of the base treatment film 14 per one surface of the plating layer is more preferably 20 to 800 mg/m$^2$, and still more preferably 50 to 600 mg/m$^2$.

<Aluminum coating layer>

The aluminum-plated steel sheet 10 for hot stamping according to the embodiment preferably includes an aluminum coating layer 12 on the base steel sheet 11 on at least one surface of the base steel sheet 11. When the aluminum coating layer 12 is included, corrosion resistance after coating can be further improved after hot stamping. In addition, the presence of the aluminum coating layer 12 between the base steel sheet 11 and the surface treatment film 13 can prevent iron scale from being generated by heating during hot stamping. Iron scale becomes a manufacturing load because iron scale contaminates a heating furnace or adheres to a roll used for conveyance. Therefore, when iron scale is generated, a step such as shot blasting is required to remove the iron scale, which is not economically preferable.

The type of the aluminum coating layer is not particularly limited. Examples of the composition of the aluminum coating layer include aluminum plating, Al-Si plating, Al-Si-Mg, and Al-Si-Ca plating.

For example, the chemical composition (average chemical composition) of the aluminum coating layer may be a plating layer containing, in terms of mass%, Al: 80.0 to 95.0%, Si: 2.0 to 15.0%, Fe: 1 to 15.0%, Cr: 0% or more and less than 1.0%, Mo: 0% or more and less than 1.0%, Zn: 0% or more and less than 1.0%, V: 0% or more and less than 1.0%, Ti: 0% or more and less than 1.0%, Sn: 0% or more and less than 1.0%, Ni: 0% or more and less than 1.0%, Cu: 0% or more and less than 1.0%, W: 0% or more and less than 1.0%, Bi: 0% or more and less than 1.0%, Mg: 0% or more and less than 1.0%, Ca: 0% or more and less than 1.0%, and remainder: impurities.

When the Al content in the aluminum coating layer is less than 80.0%, corrosion resistance after hot stamping (corrosion resistance in a hot-stamp formed body) deteriorates. Therefore, the Al content is preferably 85.0% or more. The Al content is more preferably 88.0% or more. Meanwhile, when the Al content in the aluminum coating layer is more than 95.0%, plating adhesion may deteriorate. Therefore, the Al content is preferably 95.0% or less. The Al content is more preferably 92.0% or less.

When the Si content in the aluminum coating layer is less than 2.0%, plating adhesion may deteriorate. Therefore, the Si content is preferably 2.0% or more. The Si content is more preferably 3.0% or more, and still more preferably 4.0% or more. Meanwhile, when the Si content in the aluminum coating layer is more than 15.0%, plating adhesion may deteriorate. Therefore, the Si content is preferably 15.0% or less. The Si content is more preferably 13.0% or less.

The Fe content is preferably 1.0% or more and 15.0 or less.

The chemical composition of the aluminum coating layer can be measured by a fluorescent X-ray method based on JIS G K 0119:2008. That is, the relationship between the X-ray intensity and the content is obtained in advance using a sample in which the content of the target element is known. From a calibration curve created based on the obtained relationship, the content of each element, that is, the chemical composition, of an unknown sample can be determined.

[Adhesion Amount of Aluminum Coating Layer]

The aluminum coating layer 12 is provided to one surface or both surfaces of the base steel sheet 11. The adhesion amount is preferably 5 to 140 g/m$^2$ per one surface.

When the adhesion amount per one surface is less than 5 g/m$^2$, an iron scale is generated on the surface of the base steel sheet in the heating step of hot stamping, and a step of removing the scale is required. On the other hand, when the adhesion amount per one surface is more than 140 g/m$^2$, it takes time to progress the alloying reaction between Al and Fe in the hot stamping heating step necessary for enhancing the corrosion resistance after coating, which is not preferable from the viewpoint of productivity. Therefore, the adhesion amount of the aluminum coating layer 12 is preferably 5 to 140 g/m$^2$ per one surface.

<Base Steel Sheet>

Next, the base steel sheet 11 of the aluminum-plated steel sheet 10 for hot stamping according to the embodiment will be described. The base steel sheet 11 is not particularly limited as long as it is a steel sheet that can be suitably used for a hot stamping method. The chemical composition of the base steel sheet 11 applicable to the aluminum-plated steel sheet 10 for hot stamping according to the embodiment may be, for example, in terms of mass%:

C: 0.03 to 0.60%,
Si: 0.01 to 0.60%,
Mn: 0.50 to 3.00%,

P: 0.050% or less,
S: 0.020% or less,
Al: 0.100% or less,
Ti: 0.01 to 0.10%,
B: 0.0001 to 0.0100%,
N: 0.010% or less,
Cr: 0 to 1.00%,
Ni: 0 to 2.00%,
Cu: 0 to 1.000%,
Mo: 0 to 1.00%,
V: 0 to 1.00%,
Nb: 0 to 1.00%,
Sn: 0 to 1.00%,
W: 0 to 1.00%,
Ca: 0 to 0.010%,
REM: 0 to 0.30%, and
remainder: Fe and impurities.

Examples of the form of the base steel sheet 11 include a steel sheet such as a hot-rolled steel sheet or a cold-rolled steel sheet.

Hereinafter, the preferred range of each element of the base steel sheet 11 of the aluminum-plated steel sheet 10 for hot stamping and the reason therefor will be described in detail. In the following description on the chemical composition of the base steel sheet 11, the expression "%" means "mass%" unless otherwise specified.

[C: 0.03 to 0.60%]

C is contained to ensure the intended mechanical strength. When the C content is 0.03% or more, sufficient improvement in mechanical strength is obtained, and the effect of containing C is sufficiently obtained. Therefore, the C content is preferably 0.03% or more. The C content is more preferably 0.20% or more. Meanwhile, when the C content is 0.60% or less, it is possible to suppress deterioration in elongation and drawing while improving the strength of the steel sheet. Therefore, the C content is preferably 0.60% or less. The C content is more preferably 0.40% or less.

[Si: 0.01 to 0.60%]

Si is one of the strength improving elements for improving mechanical strength, and is contained in order to secure the intended mechanical strength, similarly to C. When the Si content is 0.01% or more, the strength improving effect is sufficiently exhibited, and the mechanical strength is sufficiently improved. Therefore, the Si content is preferably 0.01% or more. The Si content is more preferably 0.10% or more. Meanwhile, since Si is also an easily oxidized element, when the Si content is 0.60% or less, deterioration in wettability at the time of melt Al plating due to the influence of an oxide of Si formed on the surface layer of the steel sheet is suppressed, and occurrence of bare spots can be suppressed. Therefore, the Si content is preferably 0.60% or less. The Si content is more preferably 0.40% or less.

[Mn: 0.50 to 3.00%]

Mn is one of the strengthening elements that strengthen steel and is also one of the elements that enhances hardenability. Furthermore, Mn is an element effective for preventing hot embrittlement due to S, which is an impurity. When the Mn content is 0.50% or more, such effects can be sufficiently obtained. Therefore, in order to reliably exhibit the above effects, the Mn content is preferably 0.50% or more. The Mn content is more preferably 0.80% or more. Meanwhile, since Mn is an austenite forming element, when the Mn content is 3.00% or less, the residual austenite phase does not excessively increase, and deterioration in strength is suppressed. Therefore, the Mn content is preferably 3.00% or less. The Mn content is more preferably 1.50% or less.

[P: 0.050% or less]

P is an impurity contained in steel. When the P content is 0.050% or less, it is possible to prevent P contained in a steel sheet from segregating at a grain boundary of the steel sheet and reducing toughness of the base metal of a hot-stamped formed body, and it is possible to suppress deterioration in delayed fracture resistance of the steel sheet. Therefore, the P content is preferably 0.050% or less, and the P content is preferably as small as possible. If necessary, the P content may be 0.045% or less or 0.040% or less. The lower limit of the P content is 0%, but the lower limit may be 0.001% or 0.005%.

[S: 0.020% or less]

S is an impurity contained in steel. When the S content is 0.020% or less, it is possible to prevent S contained in the steel sheet from forming sulfide and reducing toughness of the steel sheet, and it is possible to suppress deterioration in delayed fracture resistance of the steel sheet. Therefore, the S content is preferably 0.020% or less, and the S content is preferably as small as possible. If necessary, the S content may be 0.015% or less or 0.010% or less. The lower limit of the S content is 0%, but the lower limit may be 0.001% or 0.002%.

[Al: 0.100% or less]

Al is generally used for deoxidizing steel. Meanwhile, when the Al content is 0.100% or less, an increase in the Ac3 point of the steel sheet is suppressed, so that the heating temperature required for ensuring hardenability of the steel during hot stamping can be reduced, which is desirable in terms of hot stamping manufacture. Therefore, the Al content in the steel sheet is preferably 0.100% or less, more preferably 0.050% or less, and still more preferably 0.030% or less. The lower limit of the Al content is 0%, but the lower limit may be 0.001%, 0.003%, or 0.007%.

[Ti: 0.01 to 0.10%]

Ti is one of the strengthening elements. When the Ti content is 0.01% or more, a strength improving effect and an oxidation resistance improving effect can be sufficiently obtained. Therefore, in order to reliably exhibit the above effects, the Ti content is preferably 0.01% or more. The Ti content is more preferably 0.03% or more. Meanwhile, when the Ti content is 0.10% or less, for example, formation of carbides and nitrides is suppressed, softening of steel can be suppressed, and the intended mechanical strength can be sufficiently obtained. Therefore, the Ti content is preferably 0.10% or less. The Ti content is more preferably 0.08% or less.

[B: 0.0001 to 0.0100%]

B acts during quenching and has an effect of improving strength. When the B content is 0.0001 % or less, such strength improving effect can be sufficiently obtained. Therefore, the B content is preferably 0.0001% or more. The B content is more preferably 0.0010% or more. Meanwhile, when the B content is 0.0100% or less, formation of inclusions is reduced, embrittlement of the steel sheet is suppressed, and deterioration in fatigue strength can be suppressed. Therefore, the B content is preferably 0.0100% or less. The B content is more preferably 0.0040% or less.

[N: 0.010% or less]

N is an impurity contained in steel. When the N content is 0.010% or less, formation of nitrides due to N contained in the steel sheet is suppressed, and deterioration in toughness of the steel sheet can be suppressed. Further, when B is contained in the steel sheet, N contained in the steel sheet is prevented from bonding with B and reducing the amount of B in solid solution, and deterioration in hardenability improving effect of B can be suppressed. Therefore, the N content is preferably 0.010% or less, and the N content is more preferably as small as possible.

The base steel sheet of the steel sheet for hot stamping according to the embodiment may further contain, as an optional element, one or more elements selected from the group consisting of Cr, Mo, Ni, Cu, V, Nb, Sn, W, Ca, and REM. The lower limit of the content of such elements is 0%.

[Cr: 0 to 1.00%]

Cr is an element that improves hardenability of the steel sheet. In order to sufficiently obtain such effect, the Cr content is preferably 0.01% or more. Meanwhile, when the Cr content is 1.00% or less, it is possible to suppress an increase in cost while sufficiently obtaining the effect. Therefore, the Cr content when contained is preferably 1.00% or less. If necessary, the Cr content may be 0.70% or less or 0.50% or less.

[Ni: 0 to 2.00%]

Ni is an element capable of enhancing hardenability of steel and stably securing strength of a steel sheet member after quenching. In order to sufficiently exhibit such effect, the Ni content is preferably 0.10% or more. Meanwhile, when the Ni content is 2.00% or less, economic efficiency is enhanced while the above effect is sufficiently obtained. Therefore, the Ni content when contained is preferably 2.00% or less. If necessary, the Ni content may be 1.20% or less, 0.80% or less, or 0.50% or less.

[Cu: 0 to 1.000%]

Cu is an element capable of enhancing hardenability of steel and stably securing strength of a steel sheet member after quenching. Cu also improves pitting corrosion resistance in a corrosive environment. In order to sufficiently exhibit such effects, the Cu content is preferably 0.100% or more. Meanwhile, when the Cu content is 1.000% or less, economic efficiency is enhanced while the above effects are sufficiently obtained. Therefore, the Cu content when contained is preferably 1.000% or less. If necessary, the Cu content may be 0.600% or less, 0.400% or less, or 0.200% or less.

[Mo: 0 to 1.00%]

Mo is an element capable of enhancing hardenability of steel and stably securing strength of a steel sheet member after quenching. In order to sufficiently exhibit such effect, the Mo content is preferably 0.10% or more. Meanwhile, when the Mo content is 1.00% or less, economic efficiency is enhanced while the above effect is sufficiently obtained. Therefore, the Mo content when contained is preferably 1.00% or less. If necessary, the Mo content may be 0.60% or less, 0.40% or less, or 0.20% or less.

[V: 0 to 1.00%]

V is an element capable of enhancing hardenability of steel and stably securing strength of a steel sheet member after quenching. In order to sufficiently exhibit such effect, the V content is preferably 0.10% or more. Meanwhile, when the V content is 1.00% or less, economic efficiency is enhanced while the above effect is sufficiently obtained. Therefore, the V content when contained is preferably 1.00% or less. If necessary, the V content may be 0.60% or less, 0.40% or less, or 0.20% or less.

[Nb: 0 to 1.00%]

Nb is an element capable of enhancing hardenability of steel and stably securing strength of a steel sheet member after quenching. In order to sufficiently exhibit such effect, the Nb content is preferably 0.01% or more. Meanwhile, when the Nb content is 1.00% or less, economic efficiency is enhanced while the above effect is sufficiently obtained. Therefore, the Nb content when contained is preferably 1.00% or less. If necessary, the Nb content may be 0.50% or less, 0.20% or less, or 0.10% or less.

[Sn: 0 to 1.00%]

Sn is an element that improves pitting corrosion resistance in a corrosive environment. In order to sufficiently exhibit such effect, the Sn content is preferably 0.01% or more. Meanwhile, when the Sn content is 1.00% or less, deterioration in grain boundary strength is suppressed, and deterioration in toughness can be suppressed. Therefore, the Sn content when contained is preferably 1.00% or less. If necessary, the Sn content may be 0.40% or less, 0.10% or less, or 0.05% or less.

[W: 0 to 1.00%]

W is an element capable of enhancing hardenability of steel and stably securing strength of a steel sheet member after quenching. W also improves pitting corrosion resistance in a corrosive environment. In order to sufficiently exhibit such effects, the W content is preferably 0.01% or more. Meanwhile, when the W content is 1.00% or less, economic efficiency is enhanced while the above effects are sufficiently obtained. Therefore, the W content when contained is preferably 1.00% or less. If necessary, the W content may be 0.60% or less, 0.40% or less, or 0.20% or less.

[Ca: 0 to 0.010%]

Ca is an element having an effect of refining inclusions in steel and improving toughness and ductility after quenching. In order to sufficiently exhibit such effects, the Ca content is preferably 0.001% or more, and more preferably 0.002% or more. Meanwhile, when the Ca content is 0.010% or less, the cost can be suppressed while the effects are sufficiently obtained. Therefore, the Ca content when contained is preferably 0.010% or less, and more preferably 0.004% or less. If necessary, the Ca content may be 0.008% or less, 0.006% or less, or 0.0004% or less.

[REM: 0 to 0.30%]

Similarly to Ca, REM is an element having an effect of refining inclusions in steel and improving toughness and ductility after quenching. In order to sufficiently exhibit such effects, the REM content is preferably 0.001 % or more, and more preferably 0.002% or more. Meanwhile, when the REM content is 0.30% or less, the cost can be suppressed while the effects are sufficiently obtained. Therefore, the REM content when contained is preferably 0.30% or less, and more preferably 0.20% or less. If necessary, the Ca content may be 0.10% or less, 0.05% or less, or 0.02% or less.

Here, REM refers to 17 elements in total of Sc, Y, and lanthanoids, and the REM content means the total amount of the elements. REM is added to molten steel using, for example, an Fe-Si-REM alloy, which contains, for example, Ce, La, Nd, and Pr.

The remainder other than the above components are Fe and impurities. In addition to the above components, the base steel sheet 11 may contain impurities mixed in a manufacturing step or the like as long as the effects of the present invention are not impaired. Examples of such impurities include Zn (zinc) and Co (cobalt).

The chemical composition of the base steel sheet 11 of the aluminum-plated steel sheet 10 for hot stamping described above may be measured by a general analysis method. Measurement is performed by, for example, inductively coupled plasma-atomic emission spectrometry (ICP-AES). C and S may be measured by a combustion-infrared absorption method, N may be measured by an inert gas fusion-thermal conductivity method, and O may be measured by an inert gas fusion-non-dispersive infrared absorption method. When the steel sheet for hot stamping includes a plating layer on the surface, the chemical composition may be analyzed after the plating layer on the surface is removed by mechanical grinding.

In the surface of the plated steel sheet including the base steel sheet 11 having the chemical composition described above and the aluminum coating layer 12, the portion to which the surface treatment film 13 is provided can be formed into a hot stamping member having high tensile strength by heating and quenching using a hot stamping method. In addition, the hot stamping method enables press working in a softened state at high temperatures, so that the steel sheet can be easily formed.

(Manufacturing Method of Aluminum-Plated Steel Sheet for Hot Stamping)

Hereinafter, an example of the manufacturing method of the aluminum-plated steel sheet for hot stamping according to the embodiment will be described. The manufacturing method of the aluminum-plated steel sheet for hot stamping according to the embodiment is not particularly limited as long as the aluminum-plated steel sheet has the above-described configuration. The following manufacturing method is one example for manufacturing the aluminum-plated steel sheet for hot stamping according to the embodiment and is a preferred example of the manufacturing method of the aluminum-plated steel sheet for hot stamping according to the embodiment.

<Base Steel Sheet>

The base steel sheet to be subjected to aluminum plating is not particularly limited as long as it is a steel sheet that can be suitably used for a hot stamping method. Examples of the form of the base steel sheet include a steel sheet such as a hot-rolled steel sheet or a cold-rolled steel sheet.

<Formation of Aluminum Coating Layer>

In addition, examples of the method of forming the aluminum coating layer include a hot-dip plating method, an electro plating method, physical vapor deposition, chemical vapor deposition, and the like, but the present invention is not particularly limited thereto. The aluminum coating layer is formed on the surface of the base steel sheet by a known method.

<Method for Producing Surface Treatment Film>

The method for producing the surface treatment film is not particularly limited. Examples thereof includes a method in which each film-forming component is mixed and stirred with a disper, and the dissolved or dispersed mixed treatment liquid is applied on the plating layer and then dried. The mixed treatment liquid is prepared, for example, by preparation a treatment liquid of the compound A and a treatment liquid of the compound B, adjusting the pH, and then mixing each treatment liquid with another optional component such as a resin.

Hereinafter, the method will be specifically described.

Examples of the compound A contained in the surface treatment film include carbon black, graphite, and soot. In the method for producing the surface treatment film, it is preferable to use a treatment liquid in which these powders are dispersed in water or the like.

The compound A is pulverized with a machine or the like so that the powder diameter (particle size) is between 30 to 300 nm, and then the compound A is charged into a sodium hydroxide-containing treatment liquid that is adjusted to pH 9.0 to 13.0. Thereafter, the treatment liquid that has been charged with the compound A is subjected to a pretreatment by stirring at 50 to 80°C for 1 to 4 days. Thereby, the compound A having a particle size of 30 to 300 nm can be more stably dispersed in the treatment liquid. In addition, when the surface treatment film is formed, the compound A can be uniformly present in the film layer, so that the temperature rising characteristics can be improved.

Furthermore, when the treatment liquid charged with the compound A and having a pH of 9.0 to 13.0 is heated at 50 to 80°C for 1 to 4 days (that is, satisfying the above pretreatment conditions), the carbon concentration of the compound A in the film can also be increased. When the treatment liquid is subjected to the pretreatment, the outside area of the compound A particle having a low carbon concentration (for example, a portion having a high ratio of oxygen (O), nitrogen (N), sulfur (S), or the like) is dissolved by the sodium hydroxide-containing treatment liquid, and the inside area of the particle having a high carbon concentration remains. This also makes it possible to increase the carbon concentration of the compound A in the film.

On the other hand, when the above-described pretreatment conditions are not satisfied (for example, when the stirring time is less than one day, etc.), the dissolution amount of the outside area of the compound A particle having a low carbon concentration is reduced, and the carbon concentration of the compound A in the film relatively decreases. Therefore, in order to sufficiently increase the carbon concentration of the compound A in the film, it is necessary to control the conditions of the pretreatment before applying the treatment liquid.

Similarly, for the compound B that is an oxide or a fluoride of the metal element M and has a rutile structure, it is preferable to use a treatment liquid in which the powder is dispersed in water or a solvent.

The compound B is pulverized with a machine or the like so that the powder diameter (particle size) is between 10 to 300 nm, then charged into a sodium fluoride-containing treatment liquid that is adjusted to pH 3 to 7 and subjected to a pretreatment of stirring at 50 to 80°C for 4 to 24 hours. Thus, the compound B having a particle size of 10 to 300 nm can be more stably dispersed in the treatment liquid. As a result, when the surface treatment film is formed, the compound B can be present in the film in the form described below, thereby improving the temperature rising characteristics.

Using a mixed treatment liquid in which a binder component (resin) is appropriately added to the raw materials and the treatment liquid screened as described above, the surface treatment film of the embodiment can be obtained.

The method for producing the mixed treatment liquid obtained by combining the treatment liquid of the compound A and the treatment liquid of the compound B is not particularly limited. Examples thereof include a method in which the treatment liquid containing the compound A and the treatment liquid containing the compound B obtained by the above method are mixed, stirred with a disper, dissolved or dispersed, and then added with a binder (resin) or silica as necessary. In order to improve solubility or dispersibility of each of the film-forming components, a known hydrophilic solvent or the like may be added as necessary. Acid, alkali, or the like may be added to the treatment liquid to adjust pH as long as the performance thereof is not impaired.

Hereinafter, the method for producing the mixed treatment liquid will be specifically described.

In order to realize the surface treatment film satisfying the above formulas (1) and (2), first, each of the compound A and the compound B is dispersed in water or a liquid mixture of water and a solvent such as ethanol, and each treatment liquid is prepared by the above preparation method. Thereafter, the binder component (resin or the like) and the treatment liquid of the compound A are mixed, and subsequently the treatment liquid of the compound B is mixed to prepare a mixed treatment liquid. The treatment liquid of the compound B is adjusted to pH 8 or higher using ammonia water or the like after the treatment liquid of the compound B having a pH of 3 to 7 is stirred at 30 to 50°C for 4 to 25 hours and just before mixed with the treatment liquid of the compound A. When silica is included in the surface treatment film, silica is preferably added after the treatment liquid of the compound B is mixed with the liquid mixture.

In order that the content of the compound A is 30% or more at the interface side position P in the surface treatment film, the concentration (content) of the compound A in the mixed treatment liquid is 15 mass% or more in terms of dry weight (mass) ratio. In order that the content of the compound A is 80% or less at the interface side position P in the surface treatment film, the concentration (content) of the compound A in the mixed treatment liquid is 50 mass% or less in terms of dry weight (mass) ratio.

In order to satisfy the formulas (1) and (2) relating to the concentration of the metal element M, the concentration (content) of the compound B in the mixed treatment liquid is 3 to 50 mass% in terms of dry weight (mass) ratio.

In the mixed treatment liquid, the concentration (content) of the compound A and the concentration (content) of the compound B is 18 to 90% in total in terms of dry weight (mass) ratio.

Next, preferably, the obtained mixed treatment liquid is stirred at 150 rpm or more and 300 rpm just before application, and the mixed treatment liquid after stirring is applied within 5 seconds.

In addition, in order to realize the surface treatment film satisfying the above formulas (1) and (2), the mixed treatment liquid has a dynamic viscosity of 3 to 16 mPa·s at a shear rate of $10^{-3}$/s and a surface tension of 20 to 60 mN/m.

When the dynamic viscosity is less than 3 mPa·s, $C_{bM}/C_{tM}$ exceeds 10.0 in the formula (2), and there is a possibility that a desired temperature rising rate cannot be obtained. Therefore, the dynamic viscosity of the mixed treatment liquid is 3 mPa·s or more, and preferably 6 mPa·s or more. On the other hand, when the dynamic viscosity is more than 16 mPa·s, $C_{bM}/C_{tM}$ is less than 1.5 in the formula (2), and there is a possibility that a desired temperature rising rate cannot be obtained. Therefore, the dynamic viscosity of the mixed treatment liquid is 16 mPa·s or less, and preferably 12 mPa·s or less.

When the surface tension of the mixed treatment liquid is less than 20 mN/m, $C_{bM}$ is less than 1 mass%, and a desired temperature rising rate cannot be obtained. Therefore, the surface tension of the mixed treatment liquid is 20 mN/m or more, and preferably 30 mN/m or more. On the other hand, when the surface tension exceeds 60 mN/m, a desired temperature rising rate cannot be obtained, either. Therefore, the surface tension of the mixed treatment liquid is 60 mN/m or less, and preferably 40 mN/m or less.

In order to form the surface treatment film layer, the treatment liquid is applied onto the aluminum coating layer (or the chemical conversion treatment layer), and the coating film is heated and dried. The method for applying the treatment liquid is not particularly limited, and generally known application methods such as roll coating and immersion can be used.

In order to control the compound B in a predetermined concentration distribution as in the formulas (1) and (2), the heating and drying temperature after application is 55 to 120°C as an achieving temperature. The "achieving temperature" as used herein means the temperature of the surface of the base steel sheet.

When the achieving temperature is less than 55°C, the moisture evaporation rate is low, and sufficient film formability cannot be obtained, so that film adhesion may be insufficient. Furthermore, when the achieving temperature is too low, the evaporation rate of the treatment liquid is low, so that the metal element M in the compound B is concentrated on the Al-plating layer side, and $C_{bM}/C_{tM}$ becomes excessively high. As a result, heat absorption is insufficient on the surface side of the surface treatment film 13, and the temperature rising characteristics may be deteriorated during hot stamping. On the other hand, when the achieving temperature is higher than 120°C, the binder component may be modified due to thermal decomposition or the like, and adhesion or corrosion resistance may be deteriorated. The achieving temperature is more preferably 65 to 100°C.

In addition, when the time during which the temperature of the surface of the base steel sheet reaches 65°C from 25°C is t1 (when the temperature does not reach 65°C, the final achieving temperature of the base metal), and the time during which the temperature decreases from 65°C (or the final achieving temperature of the base metal) to 40°C by cooling is t2, t1 is 1.5 to 14.0 seconds, t2 is 0.5 to 8.6 seconds, and t1/t2 is 0.35 to 10.0. This makes it easy to control the concentration distribution $C_{bM}/C_{tM}$ of the compound B in the surface treatment film, and the temperature rising rate is further improved.

Further, when the time during which the temperature of the surface of the base steel sheet reaches 55°C from 25°C is t3, t3 is 5.0 to 12.0 seconds. As a result, the content of the compound A can be 30 to 80% at the interface side position P.

The heating and drying method for the applied treatment liquid is not particularly limited. Examples thereof include a method in which hot blast, induction heating, near infrared light, direct flame, or the like is used alone or in combination. As the component in the treatment liquid for dispersing or dissolving the resin, water or a solvent can be used.

(Manufacturing Method of Hot Stamping Member)

Various hot stamping members exemplified as frame components for automobiles can be manufactured using the aluminum-plated steel sheet for hot stamping in which the surface treatment film as described above is provided to at least one entire surface.

First, for example, the aluminum-plated steel sheet provided with the surface treatment film is subjected to various processing such as cutting and punching by a press to obtain the aluminum-plated steel sheet for hot stamping according to the embodiment.

In addition, the aluminum-plated steel sheet for hot stamping according to the embodiment can also be obtained by providing the surface treatment film to an aluminum-plated steel sheet that has been cut or press-punched. When the film thickness of the surface treatment film is partially reduced, energization is facilitated and spot weldability can be improved, for example, in the application of welding a plurality of steel sheets before hot stamping.

The aluminum-plated steel sheet for hot stamping to which the surface treatment film is provided as described above is hot-stamped. Examples of the heating device include an electric heating furnace, a gas heating furnace, a far-infrared furnace, or a normal heating device including an infrared light heater. The surface on the side on which the surface treatment film is provided to increase emissivity has high heat transfer effect by radiation, and thus the temperature rising rate is high. Therefore, the temperature is rapidly raised to a temperature equal to or higher than an Ac3 point at which the metallographic structure is transformed into an austenite phase. Accordingly, in the manufacturing method of a hot stamping member according to the embodiment, it is possible to further improve the productivity of the hot stamping member by reducing the heating time. In the embodiment, specific heating conditions are not particularly limited, and the heating device or the like to be used may be appropriately controlled.

Next, the heated steel sheet is formed and cooled. A portion heated to a temperature equal to or higher than the Ac3 point temperature at which the metallographic structure of the steel material is transformed into an austenite phase is quenched to increase strength simultaneously with forming. Accordingly, it is possible to obtain a hot stamping member having improved strength.

Examples

Hereinafter, examples of the present invention will be described, but the conditions in the examples are merely one condition example adopted to confirm the enablement and effects of the present invention, and the present invention is not limited to the condition example. The present invention can adopt various conditions as long as the object of the present invention is achieved without departing from the gist of the present invention.

As the base steel sheet, a steel sheet having high mechanical strength (various properties related to mechanical deformation and fracture such as tensile strength, yield point, elongation, drawing, hardness, impact value, and fatigue strength) is preferably used.

The chemical composition of the base steel sheet before plating used for the steel sheet for hot stamping shown in the following Examples are shown in Table 1 below.

[Table 1]

Chemical composition (mass%) Remainder: iron and impurities

| Steel No. | C | Si | Mn | P | S | Al | Ti | B | N | Cr | Cu | Ni | Nb | V | Mo | W | Sn | Ca | REM |
|---|---|---|---|---|---|---|---|---|---|---|---|---|---|---|---|---|---|---|---|
| S1 | 0.34 | 0.60 | 1.01 | 0.014 | 0.004 | 0.104 | 0.02 | 0.0025 | 0.004 | 0.23 | - | - | - | - | - | - | - | - | - |
| S2 | 0.25 | 0.21 | 2.01 | 0.023 | 0.004 | 0.011 | 0.03 | 0.0087 | 0.005 | 0.21 | 0.004 | 0.07 | - | - | - | - | - | - | - |
| S3 | 0.17 | 0.25 | 0.95 | 0.034 | 0.004 | 0.042 | 0.02 | 0.0002 | 0.003 | - | - | - | - | - | - | 0.02 | - | - | - |
| S4 | 0.25 | 0.21 | 2.01 | 0.041 | 0.004 | 0.011 | 0.03 | 0.0100 | 0.004 | - | - | 0.02 | - | 0.04 | - | - | - | - | - |
| S5 | 0.27 | 0.03 | 0.90 | 0.023 | 0.008 | 0.010 | 0.02 | 0.0048 | 0.010 | - | - | - | - | - | 0.10 | - | - | - | - |
| S6 | 0.37 | 0.01 | 0.95 | 0.022 | 0.010 | 0.032 | 0.02 | 0.0022 | 0.005 | - | - | - | 0.03 | - | - | - | - | - | - |
| S7 | 0.25 | 0.21 | 0.90 | 0.040 | 0.010 | 0.032 | 0.02 | 0.0029 | 0.008 | - | - | - | - | - | - | - | 0.05 | - | - |
| S8 | 0.33 | 0.12 | 0.50 | 0.022 | 0.008 | 0.036 | 0.04 | 0.0022 | 0.003 | - | - | - | - | - | - | - | - | - | 0.07 |
| S9 | 0.32 | 0.13 | 0.51 | 0.037 | 0.008 | 0.010 | 0.04 | 0.0022 | 0.008 | 0.17 | - | - | - | - | - | - | - | 0.002 | - |
| S10 | 0.10 | 0.14 | 0.53 | 0.019 | 0.009 | 0.041 | 0.04 | 0.0022 | 0.003 | - | - | - | - | - | - | - | - | - | - |

For the base steel sheet (Steel No. S1 to S10) having the chemical composition shown in Table 1, a steel sheet (base steel sheet) having width 100 mm × length 200 mm and a sheet thickness of 2.3 mm was prepared, and an aluminum coating layer and a surface treatment film were provided to both of the entire surfaces of the base steel sheet by the method described later. Here, the notation "-" in Table 1 means that a corresponding element content is 0% in the significant digits (numerical value up to the minimum digit) defined in the embodiment.

First, an aqueous treatment liquid (solvent: water) to which at least one of carbon black (CB), graphite, and soot pulverized so that the powder diameter (particle size) was 30 to 300 nm was added as the compound A, and an aqueous treatment liquid (solvent: water) to which a metal oxide or a metal fluoride pulverized so that the powder diameter (particle size) was 30 to 300 nm was added as the compound B were separately prepared. Then, the treatment liquids were mixed, and the treatment liquid to which a polyurethane resin was further added was applied onto the aluminum coating layer and dried to form a surface treatment film. The film thickness of the surface treatment film was within a range of 1.0 to 2.5 $\mu$m, and the same type of film was provided to both surfaces.

In Tables 2A and 2B, the method for producing the surface treatment film such as the types of compounds used and additives are described. The polyurethane resin was added so that the ratio in solid content in the treatment liquid was 10 to 92 mass% in all the production methods in Tables 2A and 2B. In all the production methods of Tables 2A and 2B, sodium fluoride was used as an additive when the compound B was adjusted. When the treatment liquids of the compound A and the compound B were mixed, the dry weight ratios were adjusted as shown in Tables 2A and 2B. The underlines in Tables 2A and 2B indicate that the preferred conditions of the production method of the present invention are not met.

The dynamic viscosity (mPa·s) shown in Tables 2A and 2B is a dynamic viscosity at a shear rate of $10^{-3}$/s. "Time tl", "Time t2", and "Time t3" shown in Tables 2A and 2B each indicate "time during which the temperature of the surface of the base steel sheet reaches from 25°C to 65°C", "time during which the temperature of the surface of the base steel sheet decreases from 65°C to 40°C", and "time during which the temperature of the surface of the base steel sheet reaches from 25°C to 55°C".

[Table 2A]

| Production method No. | Surface treatment film-forming step | | | | | | | | | | | | | | | | | | |
| | Compound A | | | | | Compound B | | | | | Mixed treatment liquid | | | | | Heating and drying step | | | | |
| | Type | Additive | pH | Temperature (°C) | Stirring time (day) | Metal element M | Compound type | pH | Temperature (°C) | Stirring time (hour) | Dynamic viscosity (mPa·s) | Surface tension (mN/m) | Compound A (dry weight ratio) (mass%) | Compound B (dry weight ratio) (mass%) | Compound A+B (dry weight ratio) (mass %) | Achieving temperature of base metal (°C) | Time t1 (sec) | Time t2 (sec) | Time t3 (sec) | t1/t2 |
| A1 | CB | Sodium hydroxide | 11.2 | 50 | 3 | Ir | IrO₂ | 6 | 50 | 4 | 3 | 20 | 15 | 3 | 18 | 65 | 8.0 | 5.1 | 7.0 | 1.57 |
| A2 | Graphite | Sodium hydroxide | 9.5 | 60 | 2 | V | VO₂ | 6 | 50 | 12 | 15 | 24 | 15 | 7 | 22 | 60 | 14.0 | 1.4 | 11.0 | 10.00 |
| A3 | Soot | Sodium hydroxide | 9.2 | 70 | 2 | Mn | β-MnO₂ | 5 | 50 | 16 | 4 | 31 | 18 | 3 | 21 | 68 | 11.0 | 2.4 | 8.7 | 4.58 |
| A4 | CB | Sodium hydroxide | 9.0 | 80 | 1 | Cu | CuO₂ | 6 | 50 | 24 | 16 | 60 | 21 | 4 | 25 | 62 | 12.0 | 5.2 | 9.0 | 2.31 |
| A5 | CB | Sodium hydroxide | 10.3 | 50 | 2 | Ag | AgO₂ | 5 | 50 | 4 | 5 | 43 | 20 | 15 | 35 | 120 | 13.0 | 7.0 | 5.7 | 1.86 |
| A6 | Soot | Sodium hydroxide | 11.4 | 50 | 3 | Ti | TiO₂ | 6 | 50 | 4 | 4 | 38 | 32 | 25 | 57 | 108 | 10.8 | 6.5 | 8.9 | 1.66 |
| A7 | CB | Sodium hydroxide | 10.1 | 50 | 2 | Ge | GeO₂ | 5 | 70 | 4 | 8 | 32 | 50 | 3 | 53 | 94 | 14.0 | 3.4 | 11.6 | 4.12 |
| A8 | CB | Sodium hydroxide | 13.0 | 50 | 1 | Ir | IrO₂ | 6 | 60 | 4 | 11 | 35 | 32 | 11 | 43 | 59 | 12.0 | 3.2 | 9.7 | 3.75 |
| A9 | Graphite | Ammonia | 11.5 | 50 | 2 | V | VO₂ | 5 | 80 | 4 | 12 | 21 | 15 | 50 | 65 | 88 | 8.6 | 7.0 | 7.2 | 1.23 |
| A10 | CB | Ammonia | 9.5 | 50 | 2 | Mn | β-MnO₂ | 6 | 70 | 24 | 13 | 30 | 40 | 50 | 90 | 73 | 4.5 | 0.5 | 2.6 | 9.00 |
| A11 | CB | Ammonia | 10.9 | 50 | 2 | Cu | CuO₂ | 5 | 70 | 24 | 11 | 21 | 50 | 40 | 90 | 81 | 9.1 | 2.0 | 8.6 | 4.55 |
| A12 | Graphite | Ammonia | 9.0 | 50 | 1 | Ag | AgO₂ | 6 | 60 | 24 | 5 | 23 | 21 | 51 | 72 | 92 | 8.1 | 1.6 | 7.4 | 5.06 |
| A13 | CB | Ammonia | 9.3 | 50 | 1 | Ni | NiF₂ | 6 | 60 | 24 | 4 | 25 | 41 | 18 | 59 | 101 | 8.7 | 2.5 | 7.1 | 3.48 |
| A14 | CB | Ammonia | 10.8 | 50 | 4 | Ge | GeO₂ | 5 | 60 | 24 | 7 | 31 | 45 | 11 | 56 | 111 | 16.0 | 7.0 | 9.2 | 2.29 |
| A15 | CB | Sodium hydroxide | 11.1 | 50 | 4 | Ti | TiO₂ | 6 | 60 | 24 | 11 | 48 | 19 | 41 | 60 | 104 | 8.1 | 8.6 | 7.0 | 0.94 |
| A16 | Graphite | Sodium hydroxide | 9.0 | 50 | 2 | Ni | NiF₂ | 6 | 60 | 24 | 6 | 51 | 14 | 15 | 29 | 117 | 8.0 | 4.5 | 7.0 | 1.78 |
| A17 | Graphite | Sodium hydroxide | 9.0 | 60 | 3 | Ti | TiO₂ | 5 | 50 | 12 | 7 | 23 | 13 | 19 | 32 | 110 | 13.4 | 7.0 | 5.0 | 1.91 |
| A18 | Graphite | Sodium hydroxide | 9.4 | 60 | 3 | Ti | TiO₂ | 5 | 70 | 12 | 4 | 25 | 38 | 21 | 59 | 120 | 14.0 | 2.4 | 9.1 | 5.83 |
| A19 | Graphite | Sodium hydroxide | 10.4 | 60 | 3 | Ti | TiO₂ | 5 | 60 | 12 | 6 | 31 | 42 | 23 | 65 | 105 | 12.5 | 1.5 | 10.5 | 8.33 |
| A20 | Graphite | Sodium hydroxide | 9.0 | 60 | 3 | Ti | TiO₂ | 6 | 60 | 12 | 4 | 48 | 19 | 41 | 60 | 81 | 14.0 | 5.1 | 11.8 | 2.75 |
| A21 | Graphite | Ammonia | 8.1 | 60 | 3 | Ni | NiF₂ | 6 | 60 | 12 | 11 | 28 | 45 | 13 | 58 | 55 | 12.4 | 5.1 | 10.1 | 2.43 |
| A22 | Graphite | Ammonia | 8.3 | 60 | 2 | Ni | NiF₂ | 6 | 60 | 12 | 16 | 44 | 41 | 5 | 46 | 57 | 11.5 | 3.2 | 7.0 | 3.59 |
| A23 | CB | Ammonia | 8.1 | 60 | 2 | Ni | NiF₂ | 6 | 50 | 12 | 14 | 51 | 23 | 8 | 31 | 81 | 11.1 | 7.0 | 8.3 | 1.59 |
| A24 | CB | Ammonia | 9.5 | 60 | 3 | Ni | NiF₂ | 5 | 50 | 12 | 5 | 60 | 33 | 14 | 47 | 93 | 12.9 | 6.5 | 12.0 | 1.98 |
| A25 | CB | Sodium hydroxide | 11.1 | 60 | 3 | Ni | NiF₂ | 5 | 50 | 12 | 12 | 28 | 45 | 19 | 64 | 66 | 16.8 | 2.0 | 14.5 | 8.40 |
| A26 | CB | Sodium hydroxide | 12.1 | 60 | 2 | Ni | NiF₂ | 5 | 50 | 12 | 8 | 21 | 19 | 31 | 50 | 58 | 11.4 | 2.4 | 10.4 | 4.75 |
| A27 | CB | Sodium hydroxide | 11.5 | 60 | 2 | Ti | TiO₂ | 5 | 50 | 12 | 15 | 42 | 48 | 42 | 90 | 73 | 14.0 | 4.1 | 13.0 | 3.41 |

[Table 2B]

| Production method No. | Surface treatment film-forming step | | | | | | | | | | | | | | | | | | | |
| | Compound A | | | | | Compound B | | | | | Mixed treatment liquid | | | | | Heating and drying step | | | | |
| | Type | Additive | pH | Temperature (°C) | Stirring time (day) | Metal element M | Compound type | pH | Temperature (°C) | Stirring time (hour) | Dynamic viscosity (mPa·s) | Surface tension (mN/m) | Compound dA (dry weight ratio) (mass%) | Compound dB (dry weight ratio) (mass%) | Compound A+B (dry weight ratio) (mass %) | Achieving temperature of base metal (°C) | Time t1 (sec) | Time t2 (sec) | Time t3 (sec) | t1/t2 |
| A28 | CB | Ammonia | 9.0 | 60 | 3 | Ir | $IrO_2$ | 5 | 50 | 12 | 8 | 23 | 14 | 14 | 28 | 110 | 13.4 | 4.5 | 5.0 | 2.98 |
| A29 | CB | Ammonia | 9.1 | 60 | 3 | V | $VO_2$ | 5 | 50 | 12 | 8 | 25 | 15 | 10 | 25 | 114 | 14.0 | 5.1 | 12.0 | 2.75 |
| A30 | CB | Ammonia | 9.2 | 60 | 4 | Ag | $AgO_2$ | 5 | 70 | 12 | 7 | 22 | 19 | 3 | 22 | 110 | 12.4 | 5.1 | 11.4 | 2.43 |
| A31 | CB | Sodium hydroxide | 10.1 | 50 | 4 | Ni | $NiF_2$ | 5 | 50 | 12 | 7 | 21 | 21 | 5 | 26 | 86 | 11.5 | 3.2 | 8.1 | 3.59 |
| A32 | CB | Sodium hydroxide | 11.4 | 50 | 4 | Ge | $GeO_2$ | 6 | 50 | 12 | 8 | 29 | 47 | 39 | 86 | 67 | 14.0 | 6.1 | 13.0 | 2.30 |
| A33 | Graphite | Sodium hydroxide | 10.6 | 50 | 4 | Ti | $TiO_2$ | 5 | 50 | 12 | 9 | 23 | 23 | 31 | 54 | 108 | 12.4 | 6.5 | 5.0 | 1.91 |
| A34 | Graphite | Sodium hydroxide | 10.1 | 50 | 3 | Ti | $TiO_2$ | 5 | 50 | 12 | 7 | 31 | 41 | 21 | 62 | 81 | 12.4 | 5.1 | 10.1 | 2.43 |
| A35 | Graphite | Sodium hydroxide | 10.6 | 60 | 3 | Ti | $TiO_2$ | 6 | 50 | 12 | 8 | 45 | 28 | 18 | 46 | 80 | 11.5 | 3.2 | 7.0 | 3.59 |
| A36 | Graphite | Sodium hydroxide | 10.9 | 60 | 3 | Ti | $TiO_2$ | 7 | 50 | 12 | 7 | 41 | 48 | 41 | 89 | 93 | 14.0 | 4.1 | 13.0 | 3.41 |
| a1 | CB | Sodium hydroxide | <u>13.4</u> | 50 | <u>0.5</u> | Mn | $\beta\text{-}MnO_2$ | 6 | 50 | 16 | 4 | 23 | 12 | 2 | 14 | 94 | 13.7 | 4.5 | 12.0 | 3.04 |
| a2 | Graphite | Sodium hydroxide | 9.0 | 50 | 1 | Al | <u>Al</u> | 6 | 50 | 16 | 5 | 25 | 21 | 19 | 40 | 71 | 14.0 | 7.0 | 11.4 | 2.00 |
| a3 | CB | Sodium hydroxide | 11.4 | 50 | 1 | Mn | <u>MnO</u> | 6 | 50 | 16 | 4 | 25 | 15 | 21 | 36 | 65 | 8.1 | 4.1 | 7.1 | 1.98 |
| a4 | CB | Sodium hydroxide | 9.5 | 50 | 1 | Ca | <u>$CaF_2$</u> | 6 | 50 | 12 | 4 | 24 | 14 | 12 | 26 | 60 | 9.4 | 4.9 | 7.4 | 1.92 |
| a5 | Graphite | Sodium hydroxide | 8.7 | 50 | 1 | Cu | $CuO_3$ | 6 | 50 | 12 | 2 | 29 | 10 | 1 | 11 | 65 | 10.2 | 7.0 | 8.1 | 1.46 |

(continued)

| Production method No. | Surface treatment film-forming step | | | | | | | | | | | | | | | | | | | |
| | Compound A | | | | | Compound B | | | | | Mixed treatment liquid | | | | | Heating and drying step | | | | |
| | Type | Additive | pH | Temperature (°C) | Stirring time (day) | Metal element M | Compound type | pH | Temperature (°C) | Stirring time (hour) | Dynamic viscosity (mPa·s) | Surface tension (mN/m) | Compound A (dry weight ratio) (mass%) | Compound B (dry weight ratio) (mass%) | Compound A+B (dry weight ratio) (mass %) | Achieving temperature of base metal (°C) | Time t1 (sec) | Time t2 (sec) | Time t3 (sec) | t1/t2 |
| a6 | Graphite | Sodium hydroxide | 7.1 | 50 | 1 | Mn | $\beta$-$MnO_4$ | 6 | 50 | 12 | <u>24</u> | 36 | 8 | 5 | 13 | 67 | 9.2 | 5.3 | 7.3 | 1.74 |
| a7 | CB | Sodium hydroxide | 6.3 | 50 | 1 | Cu | $CuO_2$ | 6 | 50 | 12 | 1 | 51 | 12 | 1 | 13 | 74 | 10.1 | 6.1 | 8.2 | 1.66 |
| a8 | CB | Ammonia | 6.2 | 60 | 1 | Ir | $IrO_2$ | 6 | 50 | 12 | 8 | 41 | 14 | 3 | 17 | <u>45</u> | 16.0 | 5.9 | 11.4 | 2.71 |
| a9 | Graphite | Sodium hydroxide | 7.1 | 50 | 1 | Mn | $\beta$-$MnO_4$ | 6 | <u>25</u> | 2 | 5 | 28 | 15 | 1 | 16 | 79 | 8.2 | 3.3 | 7.0 | 2.48 |
| a10 | Graphite | Sodium hydroxide | 8.7 | 50 | 1 | Cu | $CuO_3$ | 6 | 50 | 12 | 4 | <u>10</u> | 3 | 5 | 8 | 65 | 8.6 | 2.9 | 7.4 | 2.97 |

Thereafter, a thermocouple was connected to the surface of the aluminum-plated steel sheet (aluminum-plated steel sheet for HS) provided with the surface treatment film so that the temperature at each position could be measured. Then, the aluminum-plated steel sheet for HS was heated in an electric heating furnace at a set temperature of 940°C, and when the surface temperature reached 930°C, the aluminum-plated steel sheet for HS was taken out from the heating furnace. Thereafter, the aluminum-plated steel sheet for HS was rapidly cooled with a flat mold to obtain a hot stamping member.

In this example, Al-10 mass% Si plating was applied to the base steel sheet by a hot-dip plating method, and then the surface treatment film was provided. In the case of the hot-dip plating method, the base steel sheet was immersed in a plating bath, and then the adhesion amount was adjusted to 100 g/m$^2$ per one surface by a gas wiping method.

The film composition, temperature rising rate (temperature rising characteristics), and film adhesion of the surface treatment film were investigated. Note that the hot stamping member is not necessarily used as a member that receives sliding or the like. Therefore, in the example, film adhesion is not an essential characteristic to be provided as a hot stamping member and is a preferable characteristic to be provided.

The evaluation method of each evaluation item is described as follows.

(1) Temperature Rising Rate (Temperature Rising Characteristics)

(Rating)

The temperature rising rate in each aluminum-plated steel sheet for HS was calculated from the temperature change obtained from the thermocouple provided in each aluminum-plated steel sheet for HS and the heating time in the electric heating furnace, and evaluation was performed. Specifically, the temperature rising rate from room temperature to 910°C was calculated, and evaluation was performed based on the following evaluation criteria. Rating "2" or higher was regarded as pass.

(Rating)

4: Temperature rising rate of 5.7 °C/s or more
3: Temperature rising rate of 4.3 °C/s or more and less than 5.7 °C/s
2: Temperature rising rate of 3.5 °C/s or more and less than 4.3 °C/s
1: Temperature rising rate of less than 2.5 °C/s

(2) Film adhesion

The obtained hot-stamp formed body was placed in a rubbing tester ("Rubbing tester 1509", manufactured by Imoto machinery Co.,LTD), and then absorbent cotton impregnated with ethanol was slid (reciprocated) 10 times at stroke distance: 100 mm, speed: 30 reciprocations per minute, and load: 0.5 kgf/cm$^2$, and then the film state was evaluated according to the following evaluation criteria.

(Rating)

3: There is no trace over the entire sliding portion.
2: There is a slight trace in part of the sliding portion.
1: The film disappears from the sliding part.

<Example 1>

In Table 3, B1 to B16 are invention examples, and b1 to b8 are comparative examples.
In the Examples, a powder and an aqueous dispersion of carbon black (CB), graphite, and soot were used as a compound other than the binder component when the aqueous treatment liquid was prepared.
In Comparative Example b1, the carbon concentration of the compound A was as low as 71%. In Comparative Examples b2 to b4, the compound B did not have a rutile structure. In Comparative Examples b5 and b10, the formula (1) was not satisfied. In Comparative Examples b6, b7, b8, and b9, the formula (2) was not satisfied. In Comparative Examples b1 to b7, b9, and b10, the temperature rising rate was rated as 1, whereas in Invention Examples B1 to B16, the temperature rising rate was rated as 2.

[Table 3]

| Reference sign | Production method No. | Steel No. | Surface treatment film | | | | | | | | | Characteristics evaluation | | Note |
|---|---|---|---|---|---|---|---|---|---|---|---|---|---|---|
| | | | Film thickness (μm) | Compound A | | Metal element M | Compound type | Compound B | | | | Temperature rising characteristics | Film adhesion | |
| | | | | Carbon concentration (mass %) | Content of compound A (%) | | | Type | Crystal structure | CbM (mass %) | $C_{bM}/C_{tM}$ | | | |
| B1 | A1 | S2 | 1.0 | 80 | 20 | Ir | $IrO_2$ | Oxide | Rutile type | 1 | 3.1 | 3 | 2 | Invention example |
| B2 | A2 | S10 | 2.0 | 82 | 20 | V | $VO_2$ | Oxide | Rutile type | 7 | 5.2 | 3 | 2 | |
| B3 | A3 | S7 | 2.5 | 83 | 20 | Mn | $β-MnO_2$ | Oxide | Rutile type | 14 | 6.7 | 3 | 2 | |
| B4 | A4 | S3 | 1.0 | 81 | 20 | Cu | $CuO_2$ | Oxide | Rutile type | 24 | 8.2 | 3 | 2 | |
| B5 | A5 | S2 | 1.3 | 85 | 20 | Ag | $AgO_2$ | Oxide | Rutile type | 40 | 8.6 | 3 | 2 | |
| B6 | A6 | S1 | 1.5 | 83 | 30 | Ti | $TiO_2$ | Oxide | Rutile type | 22 | 2.0 | 3 | 2 | |
| B7 | A7 | S5 | 2.3 | 91 | 50 | Ge | $GeO_2$ | Oxide | Rutile type | 24 | 3.4 | 3 | 2 | |
| B8 | A8 | S1 | 2.1 | 92 | 30 | Ir | $IrO_2$ | Oxide | Rutile type | 28 | 6.9 | 3 | 2 | |
| B9 | A9 | S8 | 1.7 | 96 | 20 | V | $VO_2$ | Oxide | Rutile type | 29 | 8.0 | 3 | 2 | |
| B10 | A10 | S8 | 1.9 | 86 | 40 | Mn | $β-MnO_2$ | Oxide | Rutile type | 24 | 8.1 | 3 | 2 | |
| B11 | A11 | S3 | 1.6 | 86 | 50 | Cu | $CuO_2$ | Oxide | Rutile type | 31 | 1.9 | 3 | 2 | |
| B12 | A12 | S1 | 1.5 | 86 | 20 | Ag | $AgO_2$ | Oxide | Rutile type | 35 | 2.9 | 3 | 2 | |
| B13 | A13 | S7 | 1.4 | 92 | 40 | Ni | $NiF_2$ | Fluoride | Rutile type | 24 | 4.3 | 3 | 2 | |
| B14 | A14 | S6 | 1.3 | 85 | 50 | Ge | $GeO_2$ | Oxide | Rutile type | 15 | 1.5 | 2 | 2 | |
| B15 | A15 | S8 | 1.9 | 89 | 20 | Ti | $TiO_2$ | Oxide | Rutile type | 19 | 10.0 | 2 | 2 | |
| B16 | A16 | S9 | 2.5 | 91 | 10 | Ni | $NiF_2$ | Fluoride | Rutile type | 24 | 9.0 | 2 | 2 | |

(continued)

| Reference sign | Production method No. | Steel No. | Film thickness (μm) | Compound A | | Metal element M | Compound type | Compound B | | CbM (mass %) | CbM/CtM | Characteristics evaluation | | Note |
|---|---|---|---|---|---|---|---|---|---|---|---|---|---|---|
| | | | | Carbon concentration (mass %) | Content of compound A (%) | | | Type | Crystal structure | | | Temperature rising characteristics | Film adhesion | |
| b1 | a1 | S5 | 2.4 | 71 | 10 | Mn | β-MnO₂ | Oxide | Rutile type | 3 | 4.7 | 1 | 2 | Comparative example |
| b2 | a2 | S2 | 2.1 | 82 | 20 | Al | Al | Simple metal | Face-centered cubic lattice structure | 11 | 5.2 | 1 | 2 | |
| b3 | a3 | S1 | 1.7 | 83 | 20 | Mn | MnO | Oxide | Sodium chloride type | 5 | 6.2 | 1 | 2 | |
| b4 | a4 | S8 | 1.4 | 80 | 10 | Ca | CaF₂ | Fluoride | Fluorspar type | 6 | 6.8 | 1 | 2 | |
| b5 | a5 | S1 | 1.9 | 84 | 10 | Cu | CuO₃ | Oxide | Rutile type | 0.6 | 10.5 | 1 | 2 | |
| b6 | a6 | S1 | 2.3 | 83 | 10 | Mn | β-MnO₄ | Oxide | Rutile type | 6 | 1.2 | 1 | 2 | |
| b7 | a7 | S9 | 2.5 | 82 | 10 | Cu | CuO₂ | Oxide | Rutile type | 5 | 13.0 | 1 | 2 | |
| b8 | a8 | S4 | 2.1 | 81 | 10 | Ir | IrO₂ | Oxide | Rutile type | 45 | 19.0 | 1 | 1 | |
| b9 | a9 | S3 | 2.4 | 80 | 20 | Mn | β-MnO₄ | Oxide | Rutile type | 5 | 1.0 | 1 | 2 | |
| b10 | a10 | S2 | 2.3 | 85 | 10 | Cu | CuO₃ | Oxide | Rutile type | 0.4 | 1.5 | 1 | 2 | |

Surface treatment film

<Example 2>

As shown in Table 4, Invention Examples C2 to C11, in which the content of the compound A at the position of 0.90H from the surface of the surface treatment film (that is, the interface side position P) was 30 to 80%, were more excellent in temperature rising rate than C1, in which the content of the compound A was 20% at the position.

[Table 4]

| Reference sign | Production method No. | Steel No. | Film thickness H (μm) | Compound A | | Compound B | | | | | | Characteristics evaluation | | Note |
|---|---|---|---|---|---|---|---|---|---|---|---|---|---|---|
| | | | | Carbon concentration (mass %) | Content of compound A (%) | Metal element M | Compound type | Type | Crystal structure | CbM (mass %) | $C_{bM}/C_{tM}$ | Temperature rising characteristics | Film adhesion | |
| C1 | A17 | S2 | 1.4 | 87 | 20 | Ti | $TiO_2$ | Oxide | Rutile type | 23 | 4.1 | 2 | 2 | Invention example |
| C2 | A18 | S5 | 1.2 | 82 | 30 | Ti | $TiO_2$ | Oxide | Rutile type | 32 | 4.4 | 3 | 2 | |
| C3 | A19 | S9 | 1.0 | 83 | 40 | Ti | $TiO_2$ | Oxide | Rutile type | 33 | 3.1 | 3 | 2 | |
| C4 | A20 | S10 | 2.1 | 81 | 50 | Ti | $TiO_2$ | Oxide | Rutile type | 33 | 3.5 | 3 | 2 | |
| C5 | A21 | S7 | 2.5 | 85 | 50 | Ni | $NiF_2$ | Fluoride | Rutile type | 40 | 2.8 | 3 | 2 | |
| C6 | A22 | S2 | 1.3 | 83 | 60 | Ni | $NiF_2$ | Fluoride | Rutile type | 34 | 4.1 | 3 | 2 | |
| C7 | A23 | S8 | 1.8 | 91 | 60 | Ni | $NiF_2$ | Fluoride | Rutile type | 33 | 2.9 | 3 | 2 | |
| C8 | A24 | S10 | 1.4 | 92 | 80 | Ni | $NiF_2$ | Fluoride | Rutile type | 38 | 3.4 | 3 | 2 | |
| C9 | A25 | S9 | 1.3 | 82 | 90 | Ni | $NiF_2$ | Fluoride | Rutile type | 29 | 4.2 | 3 | 1 | |
| C10 | A26 | S5 | 1.6 | 82 | 40 | Ni | $NiF_2$ | Fluoride | Rutile type | 20 | 1.7 | 3 | 3 | |
| C11 | A27 | S4 | 1.5 | 83 | 90 | Ti | $TiO_2$ | Oxide | Rutile type | 18 | 1.6 | 3 | 1 | |

EP 4 582 586 A1

<Example 3>

As shown in Table 5, Invention Examples D6 to D9, in which the compound B was $TiO_2$, were more excellent in temperature rising rate than Invention Examples D1 and D5, in which the compound B was $IrO_2$ and $GeO_2$.

[Table 5]

| | Reference sign | Production method No. | Steel No. | Film thickness H (μm) | Compound A | | Metal element M | Compound type | Compound B | | | | Characteristics evaluation | |
|---|---|---|---|---|---|---|---|---|---|---|---|---|---|---|
| | | | | | Carbon concentration (mass %) | Content of compound A (%) | | | Type | Crystal structure | CbM (mass %) | $C_{bM}/C_{tM}$ | Temperature rising characteristics | Film adhesion |
| Invention example | D1 | A28 | S2 | 1.0 | 81 | 20 | Ir | $IrO_2$ | Oxide | Rutile type | 23 | 4.1 | 2 | 2 |
| | D2 | A29 | S8 | 1.2 | 97 | 30 | V | $VO_2$ | Oxide | Rutile type | 32 | 4.4 | 3 | 2 |
| | D3 | A30 | S8 | 1.5 | 85 | 70 | Ag | $AgO_2$ | Oxide | Rutile type | 38 | 3.4 | 3 | 2 |
| | D4 | A31 | S1 | 1.9 | 92 | 80 | Ni | $NiF_2$ | Fluoride | Rutile type | 38 | 3.4 | 3 | 2 |
| | D5 | A32 | S8 | 2.5 | 82 | 90 | Ge | $GeO_2$ | Oxide | Rutile type | 29 | 4.2 | 2 | 1 |
| | D6 | A33 | S2 | 2.4 | 85 | 20 | Ti | $TiO_2$ | Oxide | Rutile type | 23 | 4.1 | 3 | 2 |
| | D7 | A34 | S4 | 1.3 | 82 | 50 | Ti | $TiO_2$ | Oxide | Rutile type | 29 | 4.2 | 4 | 2 |
| | D8 | A35 | S2 | 1.6 | 87 | 60 | Ti | $TiO_2$ | Oxide | Rutile type | 23 | 4.1 | 4 | 2 |
| | D9 | A36 | S8 | 1.3 | 82 | 90 | Ti | $TiO_2$ | Oxide | Rutile type | 29 | 4.2 | 3 | 1 |

Surface treatment film

Although the preferred embodiments of the present invention have been described in detail, the present invention is not limited to such examples. It is obvious that a person having ordinary knowledge in the technical field to which the present invention belongs can conceive various changes or modifications within the scope of the technical idea described in the claims, and it is naturally understood that such changes or modifications also belong to the technical scope of the present invention.

INDUSTRIAL APPLICABILITY

According to the above embodiment of the present invention, it is possible to provide an aluminum-plated steel sheet for hot stamping that can further improve productivity of a hot stamping member, and therefore industrial applicability is high.

REFERENCE SIGNS LIST

10 Aluminum-plated steel sheet for hot stamping
11 Base steel sheet
12 Aluminum coating layer
13 Surface treatment film
14 Base treatment film

**Claims**

1. An aluminum-plated steel sheet for hot stamping, comprising:

   a base steel sheet;
   an aluminum coating layer provided on at least one surface of the base steel sheet and having an Al content of 80 mass% or more; and
   a surface treatment film provided on the aluminum coating layer,
   wherein the surface treatment film includes:

      a compound A containing carbon; and
      a compound B that is an oxide or a fluoride of a metal element M and has a rutile structure,
      a carbon concentration of the compound A is 80 mass% or more, and
      a concentration of the metal element M satisfies a following formula (1) and a following formula (2):

$$1 \leq C_{bM} \leq 40 \cdots \text{Formula (1)}$$

$$1.5 \leq C_{bM}/C_{tM} \leq 10.0 \cdots \text{Formula (2)}$$

   herein, when the surface treatment film has an average thickness H,
   $C_{tM}$ in the formula (2) is a concentration of the metal element M in terms of mass% at a position of 0.05H from a surface of the surface treatment film, and
   $C_{bM}$ in the formula (1) and the formula (2) is a concentration of the metal element M in terms of mass% at a position of 0.95H from the surface of the surface treatment film.

2. The aluminum-plated steel sheet for hot stamping according to claim 1, wherein a content of the compound A is 30 to 80% at a position of 0.90H from the surface of the surface treatment film.

3. The aluminum-plated steel sheet for hot stamping according to claim 1 or 2, wherein the compound B is $TiO_2$.

FIG. 1

FIG. 2

## INTERNATIONAL SEARCH REPORT

International application No.

**PCT/JP2023/030923**

**A.    CLASSIFICATION OF SUBJECT MATTER**

*C23C 28/00*(2006.01)i; *B32B 9/00*(2006.01)i; *B32B 15/04*(2006.01)i; *C21D 1/18*(2006.01)i; *C21D 9/00*(2006.01)i; *C22C 21/02*(2006.01)i; *C22C 38/00*(2006.01)i; *C22C 38/14*(2006.01)i; *C22C 38/58*(2006.01)i; *C23C 26/00*(2006.01)i

FI:    C23C28/00 A; C23C26/00 A; C21D9/00 A; C21D1/18 C; C22C38/00 301W; C22C38/00 301T; C22C38/14; C22C38/58; C22C21/02; B32B9/00 A; B32B15/04 Z

According to International Patent Classification (IPC) or to both national classification and IPC

**B.    FIELDS SEARCHED**

Minimum documentation searched (classification system followed by classification symbols)

C23C28/00; B32B9/00; B32B15/04; C21D1/18; C21D9/00; C22C21/02; C22C38/00; C22C38/14; C22C38/58; C23C26/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| X | WO 2019/194308 A1 (NIPPON STEEL CORPORATION) 10 October 2019 (2019-10-10) claims, paragraphs [0056]-[0062], [0099]-[0102] | 1-3 |
| A | JP 2011-149084 A (NIPPON STEEL CORPORATION) 04 August 2011 (2011-08-04) paragraphs [0045]-[0049] | 1-3 |
| A | WO 2021/106178 A1 (NIPPON STEEL CORPORATION) 03 June 2021 (2021-06-03) paragraphs [0111]-[0155] | 1-3 |
| A | KR 10-2019-0062944 A (POSCO COATED&COLOR STEEL CO., LTD.) 07 June 2019 (2019-06-07) paragraphs [0035]-[0074], fig. 1 | 1-3 |
| P, A | WO 2022/215228 A1 (NIPPON STEEL CORPORATION) 13 October 2022 (2022-10-13) paragraphs [0103]-[0131] | 1-3 |

☐ Further documents are listed in the continuation of Box C.    ☑ See patent family annex.

| | | |
|---|---|---|
| * | Special categories of cited documents: | |
| "A" | document defining the general state of the art which is not considered to be of particular relevance | |
| "E" | earlier application or patent but published on or after the international filing date | |
| "L" | document which may throw doubts on priority claim(s) or which is cited to establish the publication date of another citation or other special reason (as specified) | |
| "O" | document referring to an oral disclosure, use, exhibition or other means | |
| "P" | document published prior to the international filing date but later than the priority date claimed | |

"T"    later document published after the international filing date or priority date and not in conflict with the application but cited to understand the principle or theory underlying the invention

"X"    document of particular relevance; the claimed invention cannot be considered novel or cannot be considered to involve an inventive step when the document is taken alone

"Y"    document of particular relevance; the claimed invention cannot be considered to involve an inventive step when the document is combined with one or more other such documents, such combination being obvious to a person skilled in the art

"&"    document member of the same patent family

| Date of the actual completion of the international search | Date of mailing of the international search report |
|---|---|
| **20 October 2023** | **31 October 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

## INTERNATIONAL SEARCH REPORT
### Information on patent family members

International application No.

**PCT/JP2023/030923**

| Patent document cited in search report | Publication date (day/month/year) | Patent family member(s) | Publication date (day/month/year) |
|---|---|---|---|
| WO 2019/194308 A1 | 10 October 2019 | US 2021/0197525 A1 claims, paragraphs [0082]-[0091], [0131]-[0133] EP 3733321 A1 CN 110582359 A CA 3061938 A KR 10-2020-0116496 A MX 2020010274 A TW 201943867 A | |
| JP 2011-149084 A | 04 August 2011 | (Family: none) | |
| WO 2021/106178 A1 | 03 June 2021 | EP 4067528 A1 paragraphs [0120]-[0159] JP 6806289 B1 KR 10-2022-0078691 A CN 114729438 A | |
| KR 10-2019-0062944 A | 07 June 2019 | (Family: none) | |
| WO 2022/215228 A1 | 13 October 2022 | (Family: none) | |

Form PCT/ISA/210 (patent family annex) (January 2015)

**EP 4 582 586 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022135751 A
- JP 2003126921 A
- JP 2011149084 A
- JP 2017518438 W